(19) Europäisches Patentamt
European Patent Office
Office européen des brevets

(11) Publication number: **0 044 666 B1**

# (12) EUROPEAN PATENT SPECIFICATION

(45) Date of publication of patent specification: **29.05.85**

(51) Int. Cl.$^4$: **C 09 K 19/60,** G 02 F 1/137

(21) Application number: **81303118.4**

(22) Date of filing: **08.07.81**

(54) **Helichromic compounds and displays.**

(30) Priority: **16.07.80 US 169275**

(43) Date of publication of application:
**27.01.82 Bulletin 82/04**

(45) Publication of the grant of the patent:
**29.05.85 Bulletin 85/22**

(84) Designated Contracting States:
**CH DE FR GB IT LI**

(56) References cited:
**FR-A-2 275 794**
**FR-A-2 444 701**
**GB-A-1 556 311**
**US-A-3 960 751**
**US-A-4 128 496**
**US-A-4 128 497**
**US-A-4 153 343**

**MOLECULAR CRYSTALS & LIQUID CRYSTALS, vol. 59, no. 3+4, 1980, Gordon and Breach Science Publishers,Inc., (US), M.G. PELLATT et al.: "Photostable anthraquinone pleochroic dyes", pages 299-316**

(73) Proprietor: **MINNESOTA MINING AND MANUFACTURING COMPANY**
**3M Center, P.O. Box 33427**
**St. Paul, MN 55133 (US)**

(72) Inventor: **Brown, Harvey A.**
**2501 Hudson Road P.O. Box 33427**
**St. Paul Minnesota 55144 (US)**
Inventor: **Huffman, William A.**
**2501 Hudson Road P.O. Box 33427**
**St. Paul Minnesota 55144 (US)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 044 666 B1

**Description**

Technical Field

The present invention relates to liquid crystal compositions and liquid crystal display devices. Unique "helichromic" compounds possessing both chromophoric and helical ordering characteristics when used in combination with nematic liquid crystals are disclosed.

Background Art

Liquid crystal display technology has become prominent in recent years due primarily to the popularity of digital displays for a variety of information display functions. Of particular note are the use of such displays in hand-held calculators and digital watches.

While there are several types of liquid crystal displays in use, a particularly advantageous display for certain high performance applications is known as the "phase-change" display. This type of display has been described in the literature, e.g. D. L. White and G. N. Taylor, "New Absorptive Mode Reflective Liquid Crystal Display Device", *Journal of Applied Physics*, Vol. 45, pp. 4718—4723, (1974). Briefly, these devices comprise a typical transmissive or reflective liquid crystal display cell having appropriate front and back electrode patterns and features a homogeneously or homoetropically oriented liquid crystal layer comprising host positive nematic liquid crystal, a guest dichroic dye, and an optically active additive in amounts sufficient to provide a cholesteric liquid crystal phase. In the absence of an electric field across the display electrodes, the dichroic dye is oriented to absorb a substantial amount, e.g. 95%, of the unpolarized incident light and the display area exhibits a color characteristic of the dichroic dye. When an electric field is applied to the desired electrode, the liquid crystal layer in register with the electrode is caused to change from a cholesteric phase to a nematic phase in homeotropic alignment due to the positive dielectric anisotropy of the liquid crystal host material. In this state, the dichroic dye in the liquid crystal layer is oriented to absorb relatively little incident light and a "clear" area, corresponding to the electrode area on a colored background, is observed. By selective activation of the electrodes, information can be readily displayed.

Due to its operating mechanism, the phase change display does not require the use of auxiliary polarizers as do other well known types of displays, e.g. twist-nematic and guest-host nematic displays. However, the phase-change displays have a number of inherent disadvantages. One significant negative performance characteristic is the so-called "storage effect" or "after-image scattering" observed when the display is switched from a field-on to a field-off state. Following this transition, the image previously displayed does not immediately disappear, but remains for several seconds or more as a milky pattern which scatters light and may render the displayed information ambiguous, particularly where rapid switching such as in multiplexing, is required. Further, significant amounts, e.g. 5—15% by weight, of the optically active and dichroic additives must be incorporated into the liquid crystal mixture. These "foreign" additives are typically chemically and/or photochemically unstable in liquid crystal display systems and their addition introduces a potential source of harmful decomposition products into the display. In addition, all the optically-active additives of the prior art are nematic liquid crystals and it is well known that liquid crystal systems comprising chemically dissimilar mixtures of liquid crystals have properties which vary nonlinearly and unpredictably with composition and temperature. Thus, typical phase-change liquid crystal mixtures may have properties such as optical anisotropy, phase transition temperature, and electric, magnetic and elastic properties which vary unpredictably. A further disadvantage of traditional phase-change displays is that high voltages are required to operate these displays since they must be turned from a cholesteric state in the field-off condition to a nematic state in the field-on position. Normally voltages of between 20 to 30 volts are required to switch a phase-change display to a field-on state.

EPO Patent Publication No. 2,104 (Application No. 78300487.2) filed November 10, 1978 teaches specific anthraquinone-type pleochroic dyes which are required to be substituted in the one, or one and five positions, with anilino or substituted anilino groups, and in the four position by hydrogen or hydroxyl groups. This reference, at page 6, states that one of the anilino substituents may have an alkyl substituent ($R_4$) which may include a chiral center. However, the reference further states at page 6, lines 12 and 13, that the identity of $R_4$ is not critical. It is further taught that these pleochroic dyes may be utilized in conventional nematic (Freedericksz effect) or cholesteric-to-nematic, phase-change-type electro-optic devices (page 6, lines 18 through 21). As discussed hereinabove, conventional cholesteric-to-nematic, phase-change displays utilize liquid crystal materials which are themselves cholesteric, or contain a cholesteric dopant.

French Patent 2,275,794 discloses several azo and azoxy compounds having assymetric sidechains. The optically-active materials disclosed are said to cholesterically order nematic liquid crystal materials to which they are added. All of the optically-active additives disclosed by this reference are themselves liquid crystal materials. As discussed hereinabove, liquid crystal systems comprising chemically-dissimilar mixtures of liquid crystals have properties which vary nonlinearly and unpredictably with composition and temperature. It is noted that the examples in this reference indicate that relatively high voltages are employed to operate devices containing these optically-active azo and azoxy compounds, i.e., voltages of above about 20 volts.

Great Britain Patent Specification No. 1,556,311 discloses liquid crystal compositions consisting of at least one optically-active liquid crystal compound with relatively weak negative dielectric anisotropy, at

least one optically-active compound with relatively strong positive dielectric anisotropy and a dichroic dyestuff (page 1, lines 25—32). Exemplary optically-active liquid crystal compounds with relatively weak negative dielectric anisotropy are given in Table I. Optically-active compounds with relatively strong positive dielectric anisotropy are given in Table II. Exemplary dichroic dyes are listed in Table III.

U.S. 4,128,497 discloses guest dichroic dyes having a plurality of azo bonding groups, which may be utilized in mixtures of liquid crystal host materials. These materials are said to be useful in electro-optic devices of both the guest-host and phase change type.

Disclosure of Invention

The present invention relates to helichromic liquid crystal displays which require no auxiliary polarizers, exhibit rapid decay and no after-image scattering and require significantly reduced additives to obtain such performance. The superior display devices of the present invention can be provided by the use of unique helichromic compounds in admixture with nematic liquid crystals. More specifically, the helichromic compounds of the present invention are organic, nonionic, nonliquid-crystalline compounds, soluble in nematic liquid crystal compositions, which compounds possess both helical ordering characteristics and chromophoric characteristics when used in combination with nematic liquid crystals.

As used herein, the term "helichromic" may be used to refer to the described helichromic compounds, to liquid crystal compositions containing such compounds and also to display devices containing the compounds of the present invention.

The helichromic compounds of the present invention are characterised by having a chromophoric moiety and a helical ordering moiety in a single molecule. As used in this application, the term "helical ordering moiety" or "helical ordering group" refers to substituents which impart to the helichromic compound helical ordering characteristics such that liquid crystal mixtures in which effective amounts of the helichromic compounds are included will exhibit helical ordering characteristics.

The helichromic displays of the present invention provide increased efficiency when compared with conventional phase-change displays since they operate effectively at lower voltages while exhibiting similar brightness, contrast and speed.

The helichromic compounds of the present invention, when in admixture with a nematic liquid crystal material in sufficient concentration, are not capable of physically helically ordering the mixture, but will allow said mixture to substantially absorb unpolarized light by propagating the unpolarized light through two elliptical modes, so that both vectors of light are absorbed. It is believed that as a result of the lack of actual physical cholesteric ordering of the liquid crystal mixture, the helichromic devices of the present invention devices exhibit improved properties over phase-change devices of the prior art. Helichromic devices employing helichromic compositions exhibit no afterimage scattering and can be operated at relatively lower voltages than traditional phase-change displays, due to the fact that these compositions do not alternate between a cholesteric and a nematic phase when subjected to an electric field. The helichromic compositions remain in a nematic state regardless of the absence or presence of an electric field. Higher voltages are required to alternate between a cholesteric mesophase and a nematic homeotropic alignment, as is required to operate the phase-change devices of the prior art, than is required to change from a nematic mesophase to a nematic homeotropic alignment, the mechanism of the helichromic displays.

The helichromic compounds of this invention also find use as components of twist nematic and guest-host nematic liquid crystal displays to eliminate optical bounce in a surprisingly efficient manner as will be discussed hereinafter.

Brief Description of the Drawings

Figures 1 and 2 are graphic presentations comparing performance characteristics of the helichromic displays of the present invention with prior art display devices.

Detailed Description

The helichromic displays of the present invention derive their superior performance properties from the use of unique helichromic compounds. The helichromic compounds of the present invention are novel, organic, nonionic, nonliquid-crystalline compounds which are soluble in nematic liquid crystal compositions and which comprise at least one chromophoric moiety and at least one helical ordering moiety in a single molecule.

The chromophoric moieties or groups useful in this invention must be capable of absorbing at least some wavelength of incident electromagnetic radiation, in the visible wavelengths. The useful chromophoric groups are dichroic groups, i.e. groups which have light absorption properties which vary depending on the alignment of the molecule with respect to the vibration mode of incident light, and which are capable of being aligned by nematic liquid crystals. Useful dichroic groups must be capable of being joined with helical ordering moieties and the resulting helichromic molecule must be dichroic in nature and have the ability to be aligned by liquid crystal materials. Exemplary dichroic groups are groups which are characteristic of the well-known azo, azo-stilbene, benzothiazolylpolyazo, azo-methine, methine, merocyanine, anthraquinone, and methine-arylidene families of dyes.

Suitable helical ordering moieties or groups are those groups which impart helical ordering characteristics to the helichromic compound as discussed hereinabove. The useful groups must cause the liquid crystal mixture in which the helichromic compound is included, to have a positive (+) or negative (−) helical ordering characteristic of less than infinite pitch when the helichromic compound is present in concentrations at or below its solubility limits. The conditions required to induce optical rotation generally follow the rule of Brewster (Brewster, J., J.A.C.S., *81*, 5475, 5483 and 5493 (1959), and involve the presence of a chiral group, e.g. one having an asymmetric carbon atom. Preferred helical ordering groups include 2-methyl and 3-methyl alkyl groups citronellyl, camphanyl, 3-methyl cyclohexyl, and α-methyl benzyl. They are particularly preferred if in the (+) form.

Preferred helichromic compositions consist essentially of a nematic liquid crystal material and, in admixture therewith, an organic, nonionic, nonliquid-crystalline helichromic compound. The helichromic compound is soluble in nematic liquid crystal material, and a dichroic dye having the general formula

$$Q{-}(Z)_n$$

wherein

Q is an azo, azo-stilbene, benzothiazolyl polyazo, methine, azo-methine, merocyanine, methine arylidene, anthraquinone or anthraquinone heterocyclic dicarboximide radical;

Z is an organic group capable of imparting helical ordering characteristics to a mixture of nematic liquid crystal and helichromic compound; and

n is an integer having a value of 1 or greater; wherein when Q is an anthraquinone radical, Z is substituted in the 2, 3, 4, 5, 6, 7 or 8 positions of Q or combinations thereof, provided that when O is an anthraquinone radical and n is 2 or greater, Z may be substituted in the 1 and 2, 1 and 3, 1 and 4, 1 and 6, 1 and 7, or 1 and 8 positions of Q or combinations thereof, and further provided that when Q is an anthraquinone radical and Z includes a linking group linking it to Q, wherein the linking group is —CH=N—,

$$—CH{=}CH—,\ —N{=}N—,\ —O—,\ —S—,\ {-}(CH_2){-}_p,\ —O{-}(CH_2){-}_p,\ —C{-}(CH_3){-}_2,\ —\overset{O}{\overset{\|}{C}}—,$$

—$C_6H_{10}$—, phenyl groups, naphthyl groups, cyclic carboximide groups or combinations thereof, wherein p is 1, 2, 3, 4 or 5, Z may be substituted in the 1, 4, 5 or 8 positions of Q or any combination thereof; and wherein when Q is an anthraquinone heterocyclic dicarboximide radical, n is 1 and Z is substituted on the nitrogen of said heterocyclic dicarboximide radical.

Preferably n is an integer from 1 to 4. As noted above, preferred dichroic groups, Q, are groups which are characteristic of the azo, azo-stilbene, benzothiazolylpolyazo, azo-methine, methine, merocyanine, anthraquinone and methine-arylidene families of dyes which are per se well-known in the art and which will be described in greater detail hereinafter. Preferred helical ordering groups, Z, are organic groups containing an asymmetric carbon atom such as the (+)-2-methyl alkyl and (+)-3-methyl alkyl groups wherein alkyl is preferably a lower alkyl of 2 to 8 carbon atoms, (+)-citronellyl, (+)-camphanyl, (+)-3-methyl cyclohexyl, and α-methylbenzyl.

The number, n, of helical ordering groups, Z, which can be substituted on the chromophoric group, Q, is dependent on the number and position of reactive sites available on the dye from which Q is derived. For example, when Q is an azo, azo-stilbene, benzothiazolylpolyazo, merocyanine, azo-methine-based, methine, or methine-arylidene group, n is preferably 1 or 2 and the helical ordering group, Z, is substituted in a position along the long axis of Q so as not to significantly decrease its effectiveness as a dichroic dye. When Q is an anthraquinone-based group and n is 1 or greater, the anthraquinone skeleton is substituted in one or more of the 2, 3, 4, 5, 6, 7 or 8 positions with helical ordering groups. However, when Q is an anthraquinone radical and n is 2 or greater, the anthraquinone skeleton may be substituted in the 1 and 2, 1 and 3, 1 and 4, 1 and 6, 1 and 7, or 1 and 8 positions, or combinations thereof, with helical ordering groups. When the anthraquinone is substituted with two $NH_2$ groups in either the 1 and 4, or 5 and 8 positions, the 2 and 3, or 6 and 7, positions of the anthraquinone skeleton, respectively, may be substituted with a cyclic dicarboximide group having a helical ordering group attached to the nitrogen. Other ballasting or auxochromic groups which may affect the order parameter or absorption band of the chromophoric moiety are permitted substituents in the remainder of the available positions as is known in the art. The preparation and structure of preferred helichromic compounds will be discussed in greater detail hereinafter.

The helichromic compounds of the present invention can be combined with, and are soluble in, nematic liquid crystal compositions which are per se known in the art. The nematic liquid crystals can have either a positive or negative dielectric anisotropy. Generally liquid crystals having higher absolute values of dielectric constant are preferred. At this time the positive nematic materials having high dielectric constants are more readily available and for convenience are referred to for purposes of illustration herein. Mixtures of positive and negative materials are also useful, particularly those mixtures having a nett positive dielectric anisotropy. As used herein the term "positive" or "negative" refers to the net dielectric anisotropy where mixtures are used.

Eutectic mixtures are also useful. Illustrative are eutectic mixtures of 4′-substituted 4-cyanobiphenyls

where the 4′ substituents are alkyl or alkoxy of 3 to 8 carbon atoms. Representative is the commercially available "E—7" mixture from B.D.H. Ltd.

Representative of nematic liquid crystals having negative dielectric anisotropy which would be useful in the present invention is the liquid crystal "EN—18" developed by Chisso Corporation.

Helichromic devices of the present invention are similar to liquid crystal display devices of the prior art in that they comprise two plates of glass of nominal thickness spaced from a few microns to a few tens of microns apart in a parallel configuration. The inner surfaces of each glass plate are coated with a thin film of for example, indium/tin oxide to form a conductive electrode surface. The electrode pattern which is desired may be produced by silk screen or photolithographic techniques which are well-known in the art. The surfaces of each inwardly facing electrode pattern are treated using techniques known in the art to insure that the helichromic-liquid crystal mixture is homeogeneously or homeotropically oriented. Homeotropic alignment is preferred, i.e., that the molecules are aligned perpendicular to the electrode surfaces. The helichromic displays of the present invention, in the absence of an electric field, propagate unpolarized light through two elliptical modes, which result in the absorption of both vectors of light and the transmission of the characteristic color of the helichromic compound. In the presence of an electric field selectively applied across electrodes the helichromic and liquid crystal molecules between the electrodes no longer possess helical ordering characteristics. Thus, liquid crystal displays containing a sufficient concentration of the helichromic compounds alternate between a helichromic-compound-colored state and a clear state, between the electrodes, when in the on and off state respectively. A plurality of helichromic compounds may be used to produce a display which appears black in the absence of an electric field, i.e., essentially all visible wavelengths of light are absorbed equally, and transparent in the presence of an electric field, i.e., all the dyes exhibiting minimum absorption.

It is a characteristic of the helichromic devices of the present invention that no auxiliary polarizer is required. Thus, these helichromic devices have brightness characteristics equivalent to phase change displays and superior to twist nematic liquid crystal devices, which require two polarizers, or guest-host liquid crystal devices which require one auxiliary polarizer. In addition, the helichromic devices of the present invention display rapid decay times, i.e., no after-image scattering, and may be operated at voltages lower than those required to operate traditional phase change devices.

As discussed hereinabove, the preferred helichromic compositions consist essentially of a nematic liquid crystal material and, in admixture therewith, an organic, nonionic, nonliquid-crystalline helichromic compound, the helichromic compound being soluble in the nematic liquid crystal material, and the helichromic compound being a dichroic dye and having the general formula

$$Q{-}(Z)_n$$

wherein

Q is an azo, azo-stilbene, benzothiazolyl-polyazo, methine, azo-methine, merocyanine, methine arylidene, anthraquinone or anthraquinone heterocyclic dicarboximide radical;

Z is an organic group capable of imparting helical ordering characteristics to the mixture of nematic liquid crystal and helichromic compound; and

n is an integer having a value of 1 or greater; wherein when Q is an anthraquinone radical, Z is substituted in the 2, 3, 4, 5, 6, 7 or 8 positions of Q or combinations thereof, provided that when O is an anthraquinone radical and n is 2 or greater, Z may be substituted in the 1 and 2, 1 and 3, 1 and 4, 1 and 6, 1 and 7, or 1 and 8 positions of Q or combinations thereof, and further provided that when Q is an anthraquinone radical and Z includes a linking group linking it to Q, wherein the linking group is —CH=N—,

$$-CH{=}CH-,\ -N{=}N-,\ -O-,\ -S-,\ -(CH_2)_p-,\ -O-(CH_2)_p,\ -C(CH_3)_2-,\ -\overset{\displaystyle O}{\overset{\|}{C}}-,$$

$-C_6H_{10}-$, phenyl groups, naphthyl groups, cyclic carboximide groups or combinations thereof, wherein p is 1, 2, 3, 4 or 5, Z may be substituted in the 1, 4, 5 or 8 positions of Q or any combination thereof; and wherein when Q is an anthraquinone heterocyclic dicarboximide radical, n is 1 and Z is substituted on the nitrogen of said heterocyclic dicarboximide radical.

The dichroic moiety Q may be substituted in a number of available positions with one or more additional ballasting groups. Exemplary ballasting groups include

$$NH_2,\ -(CH_2)_p-CH_3,\ -O-(CH_2)_pCH_3,\ -CH(CH_3)_2,\ -O-\overset{\displaystyle O}{\overset{\|}{C}}-CH_3,$$

$C_6H_{11}$, phenyl groups, naphthyl groups, and combinations thereof, wherein p is 1, 2, 3, or 4.

In addition, Q may be substituted in any available position on any aromatic ring by small side groups which influence color absorption and solubility of the helichromic compound. Exemplary of such side groups are lower alkyl groups, lower alkoxy groups, F, Cl, Br, $NO_2$, NH(alk), $N(alk)_2$, OH, CN, $CF_3$ and $CH_3$.

Exemplary dichroic groups of the azo and benzothiazolyl polyazo types include the following:

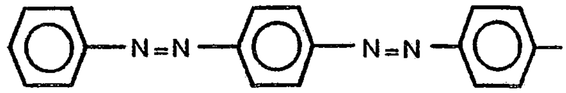

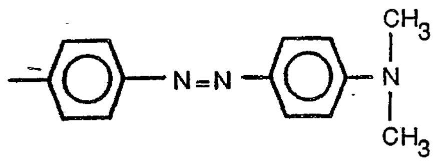

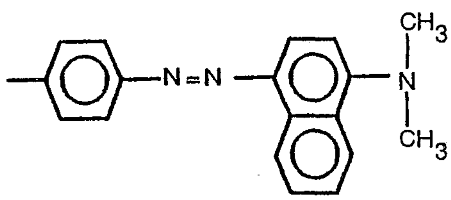

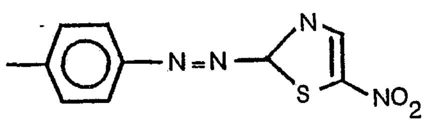

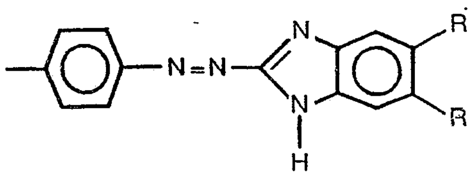

R = lower alkyl ($C_1$–$C_4$)

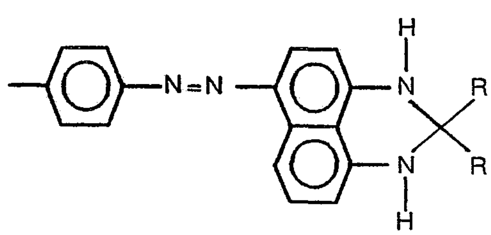

R = $CH_3$, $CH_2CH_3$

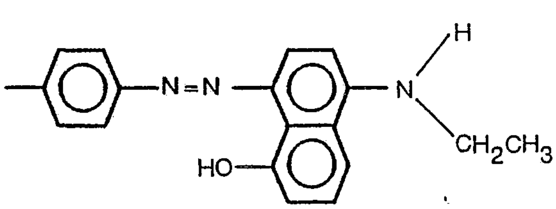

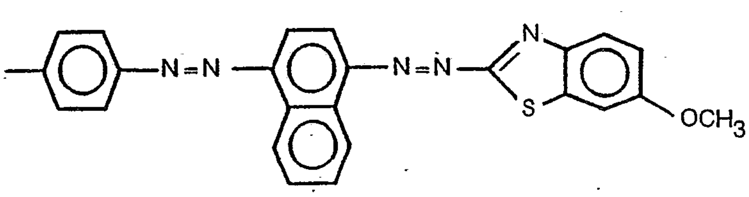

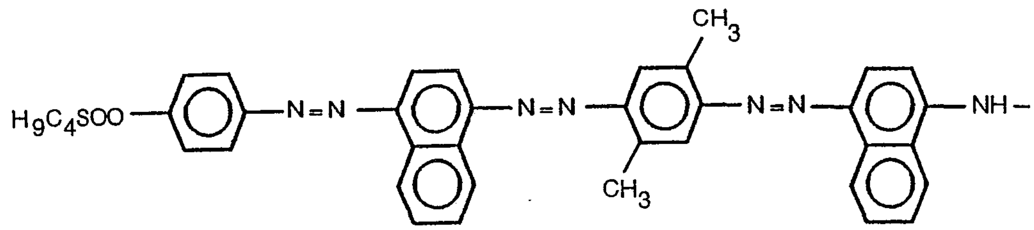

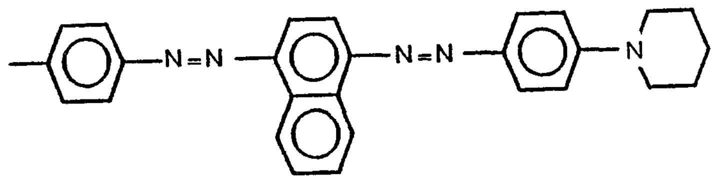

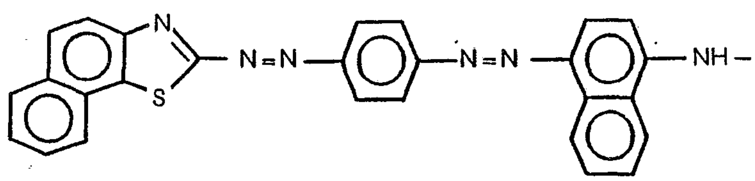

Exemplary dichroic groups of the azo-stilbene type include the following:

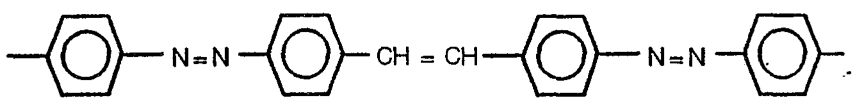

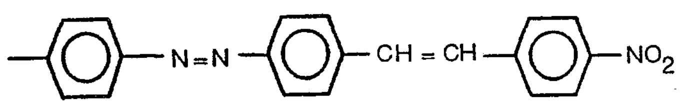

Exemplary dichroic groups of the azo-methine type include the following:

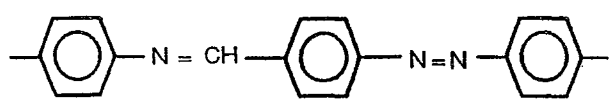

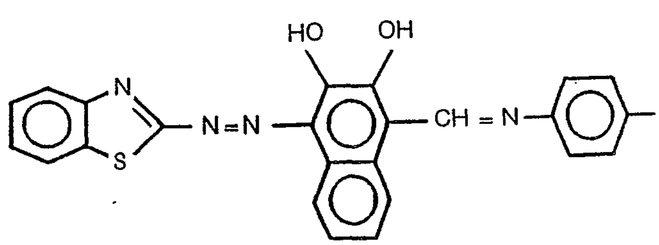

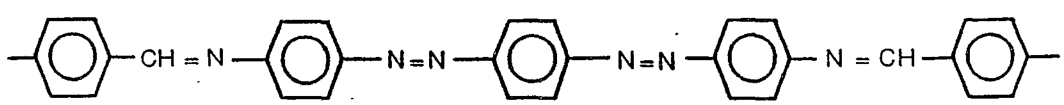

Exemplary dichroic groups of the methine type include the following:

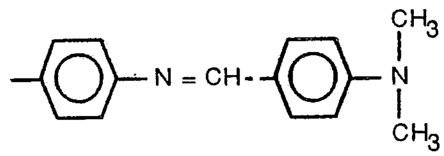

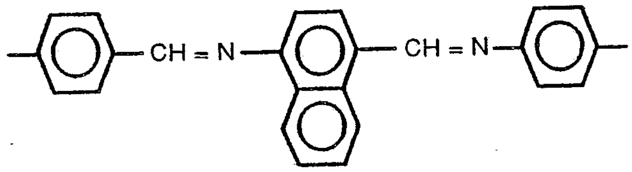

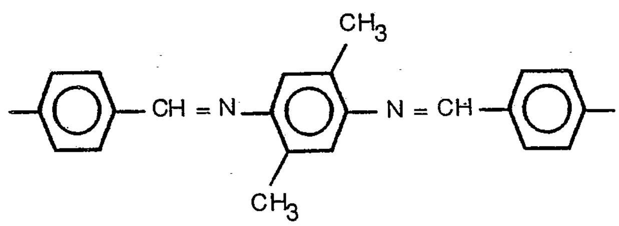

Exemplary dichroic groups of the methine-arylidene type include the following:

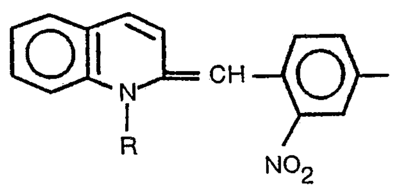

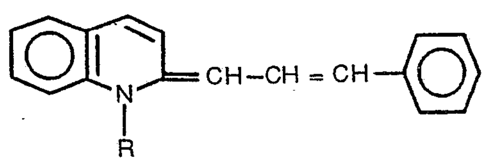

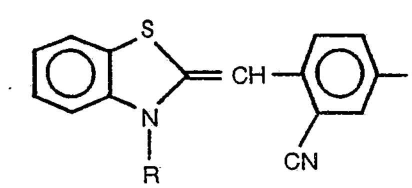

$R = -CH_3$, $-C_2H_5$, etc.

Exemplary dichroic groups of the merocyanine type include:

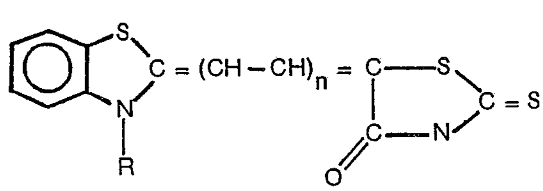

n = 1, 2 or 3.

Exemplary dichroic groups of the anthraquinone type include the following:

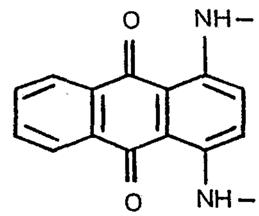

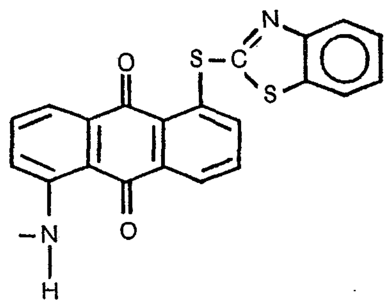

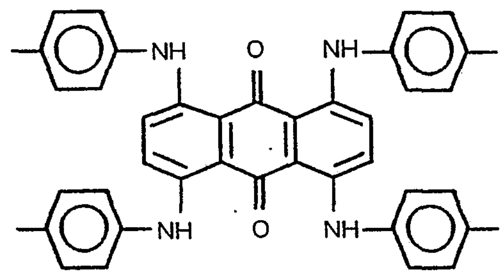

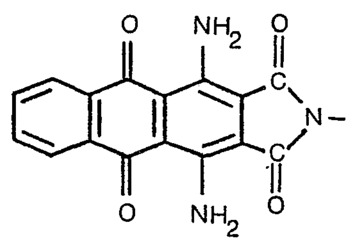

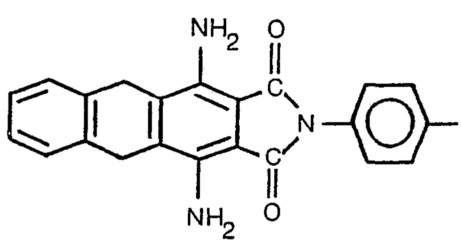

The helichromic azo and azo-stilbene dyes of this invention may be synthesized using methods of diazotization normally employed to synthesize other azo and azo-stilbene dyes. The literature abounds with methods of diazotization and specific organic synthetic procedures relating to diazotization and coupling reaction schemes. Helichromic azo and azo-stilbene type dyes may be synthesized by direct diazotization of the (+) chiral aniline. Preferred optically-active anilines have a para substituted (+)-2-methylbutyl group, (+)-3-methylbutyl group, (+)-citronellyl group, (+-camphanyl group, (+)-3-methyl cyclohexyl group, or (+)-α-methyl benzyl group. However, other useful chiral anilines may have the optically active group in the ortho or meta ring positions. Additional substituents, other than amino groups, may be present on the ring such as methyl, nitro, cyano, and hydroxy groups. The preparation of (+)-p-amino-2-methylbutylbenzene, i.e., (+) chiral aniline, is shown in D. Dolphin and Z. Muljiani, Journal of Chemical Physics, Vol. 58 [2], 414 (1973).

Alternatively the nitroso derivative of the chiral aniline may be utilized to synthesize azo-type helichromic dyes by coupling with an amino compound.

Diazotization using alkali metal nitrite in mineral acid or using nitrosylsulfuric acid is also effective in the practice of the present invention, and those skilled in the art and science of synthetic chemistry will appreciate the various techniques involved.

Helichromic polyazo dys may be synthesized by sequential diazotization and coupling. Reference is made to U.S. 4,145,114, for detailed procedures. Other pertinent references include U.S. 4,032,219; 4,029,392; 4,027,950; and 4,116,861.

Helichromic polyazo dyes may also be synthesized by tetraazotization of a polyaryl diamine and subsequent coupling with a chiral nitroso benzene group.

Helichromic polyazo dyes having more than one chiral group may be obtained by reacting a helichromic azo compound with a chiral nitroso compound, obtained by oxidation of the corresponding chiral aryl amine with caros acid (the procedure is taught in Hickenbotton, *Organic Synthetic Chemistry*, Vol. II, p. 310 (1956), in a minimum quantity of glacial acetic acid.

Helichromic benzothiazolyl polyazo dyes may be obtained by converting benzothiazolyl amines to the corresponding diazotate by the use of organic alkyl nitrites. The diazotate is then coupled to an aniline in weak acid and the benzothiazolyl azoaniline dye intermediate is recovered. Further diazotization and coupling to chiral anilines yields helichromic compounds.

Helichromic dyes of the methine type may be synthesized by combining equivalent molar amounts of a chiral aniline and an aromatic aldehyde (which may also have a chiral substituent) condensing in acetic acid, and heating.

Helichromic dyes of the azo-methine type may be synthesized by several methods known to those skilled in the art. Usually such methods involve synthesis of (+)-4-(2-methylbutyl)benzaldehyde followed by condensation with various amino azo dye intermediate to produce a chiral azo-methine dye.

Helichromic dyes of the merocyanine type may be prepared by known methods of reacting a merocyanine dye precursor using a chiral halide. Exemplary merocyanine dye precursors are decribed in The Chemistry of Synthetic Dyes, Monograph No. 127, pages 249—254 (1955).

Helichromic dyes of the methine-arylidene type are synthesized as shown in U.S. Patent No. 4,033,948.

Helichromic anthraquinone type dyes useful in the present invention may be synthesized by substituting an optically-active amino group onto a dichroic anthraquinone starting compound. Useful dichroic anthraquinones are disclosed in U.S. 3,960,750, and in U.S. 3,960,751. It is known that anthraquinones substituted with certain arylamino, heterothio, arylthio, or aminoalkyl groups are dichroic.

Helichromic anthraquinone dicarboximide type dyes may be synthesized by cyclizing the anthraquinone dicarboxylic acid or anhydride with a chiral amine at high temperatures, i.e., greater than 150°C, and high pressures, i.e., greater than about 10 atmospheres.

Particularly preferred helichromic compounds of the present invention include the following:

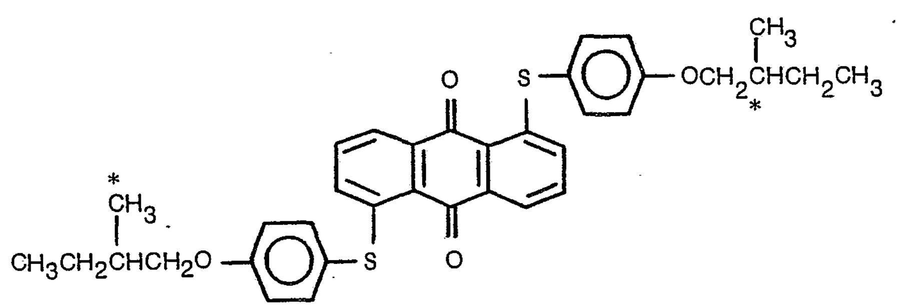

(+)

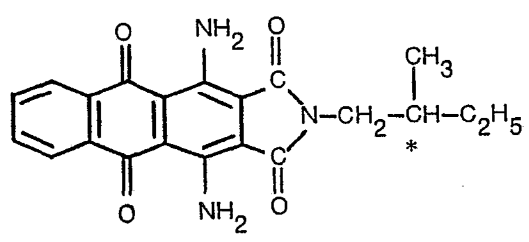

(+)

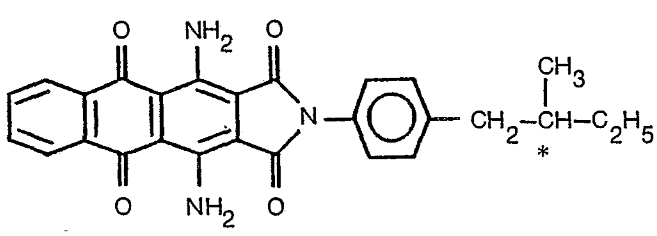

(+)

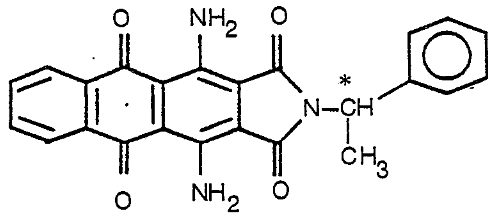

(+)

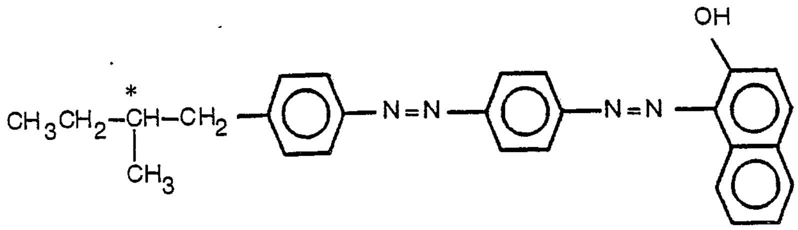

(+)

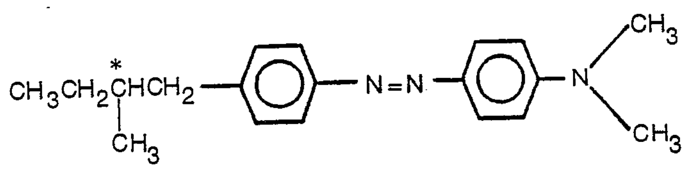

(+)

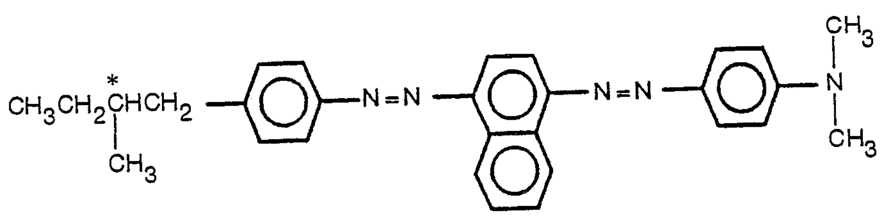

(+)

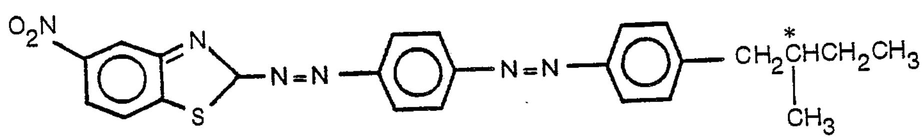

(+)

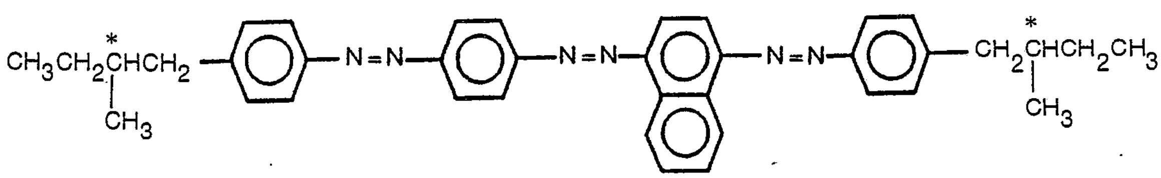

(+)

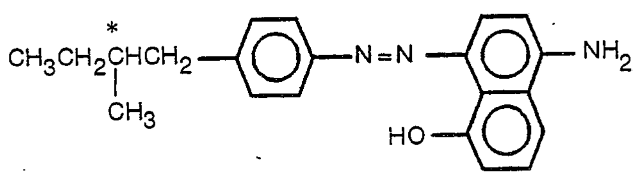

(+)

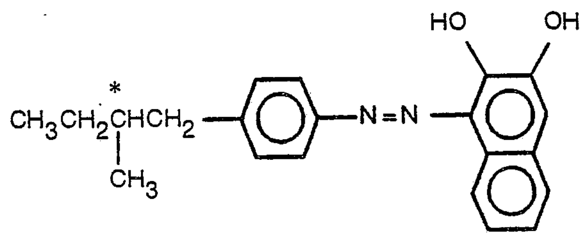

(+)

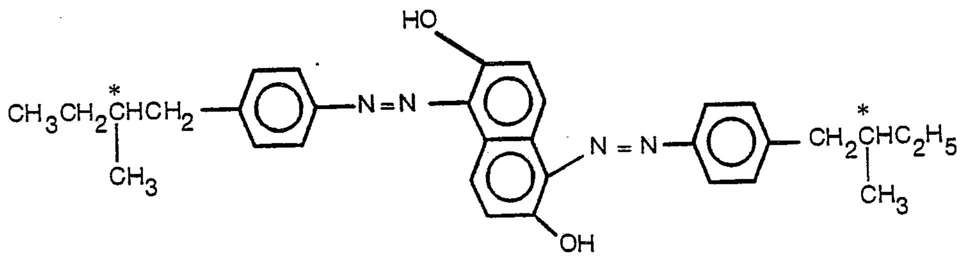

(+)

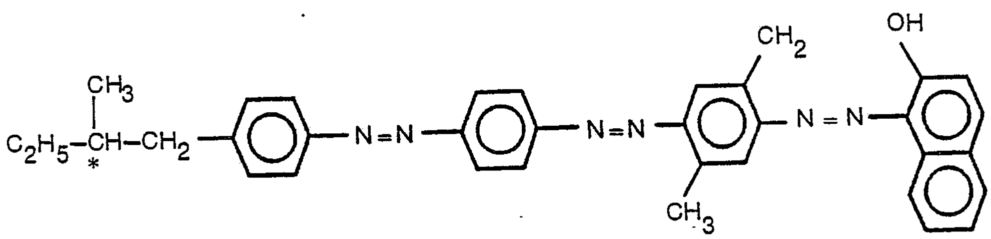

(+)

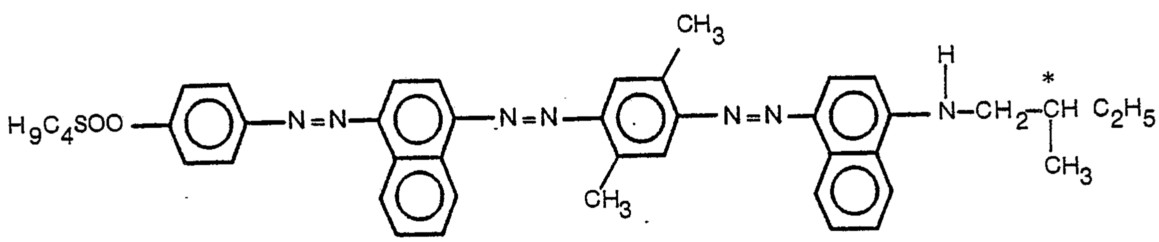

(+)

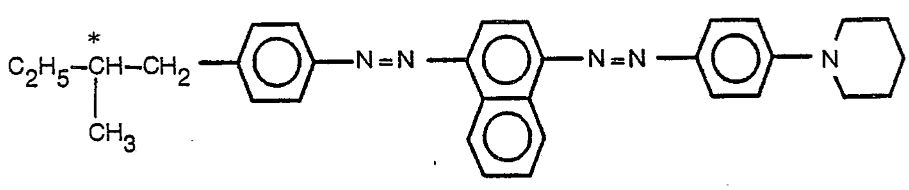

(+)

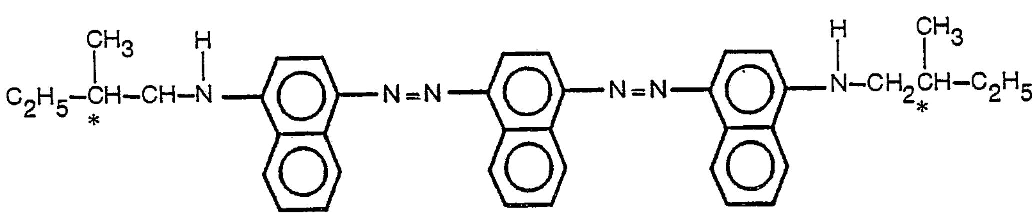

(+)

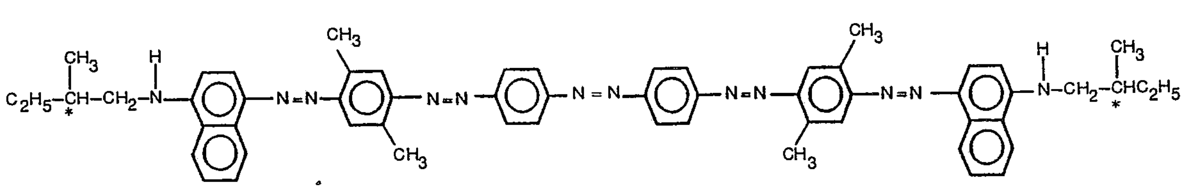

(+)

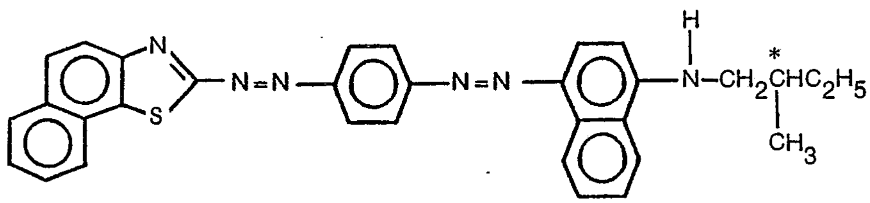

(+)

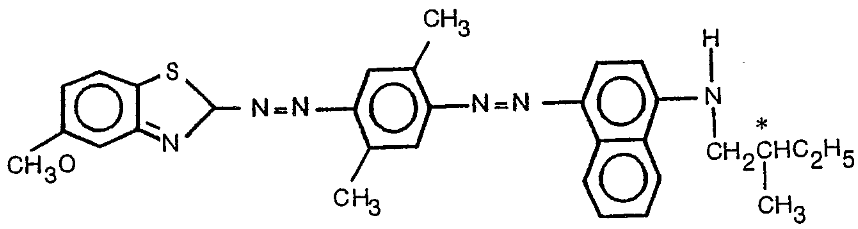

(+)

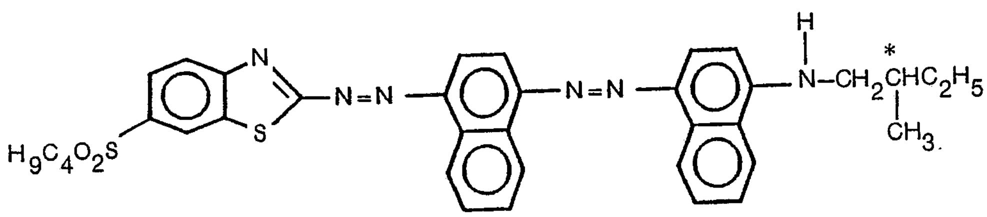

(+)

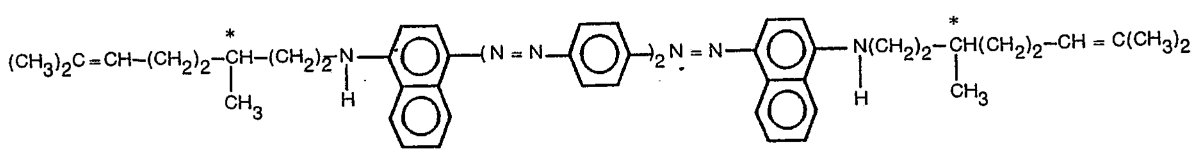

(+)

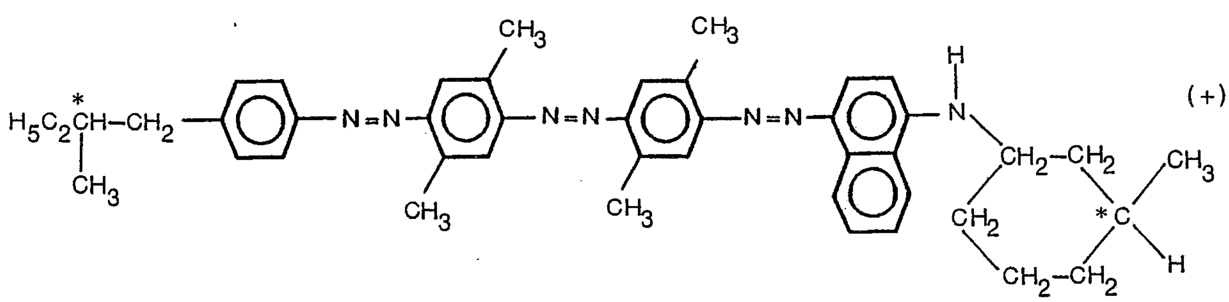

(+)

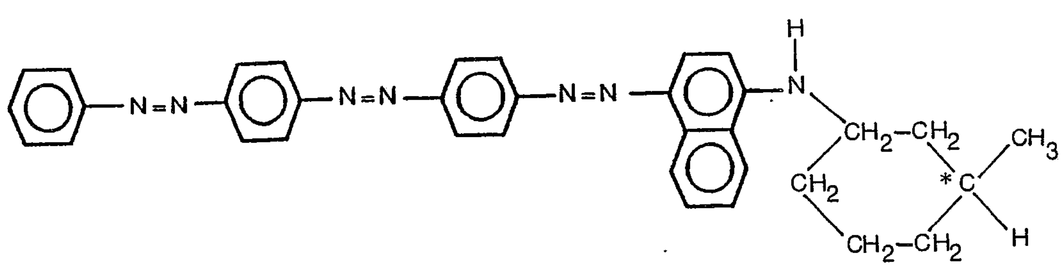

(+)

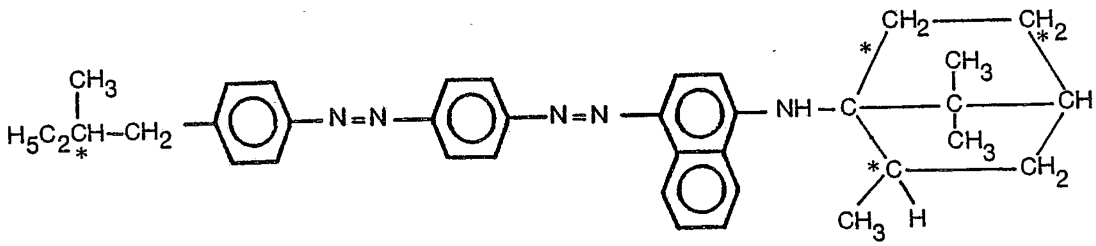

(+)

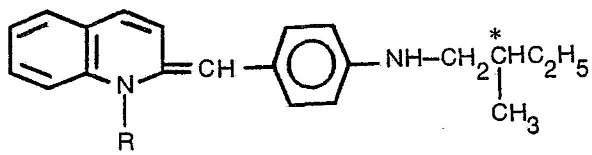

(+)

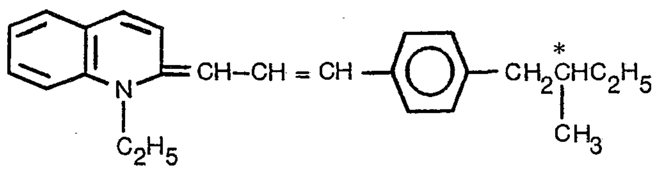

(+)

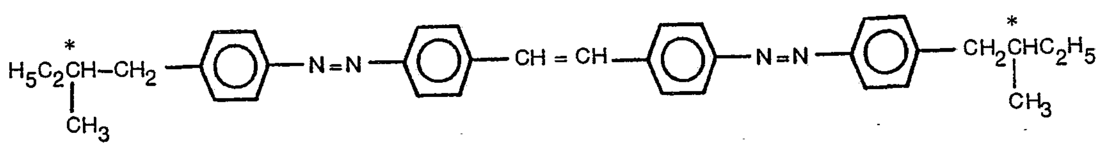

(+)

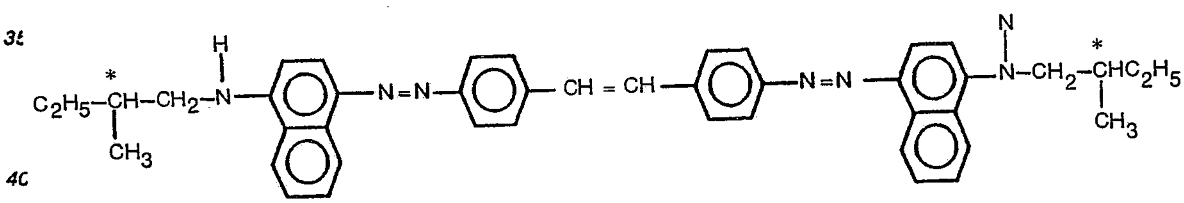

(+)

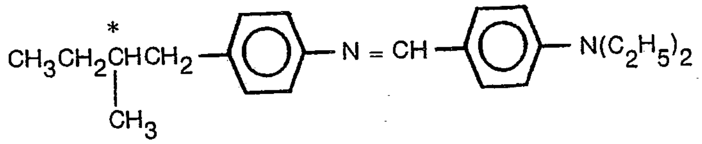

(+)

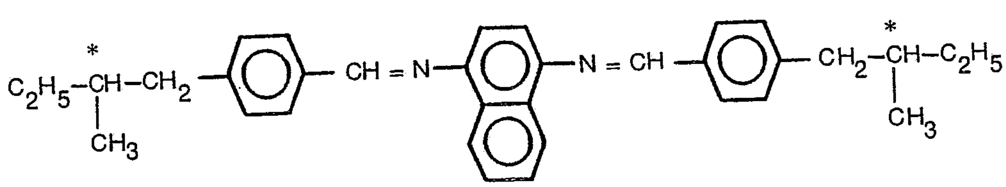

(+)

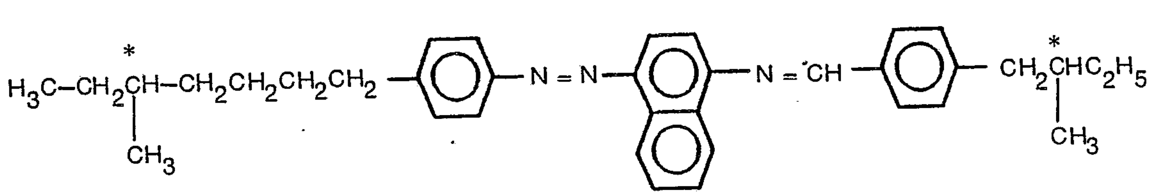

It is believed that the helichromic compound must be present in the helichromic displays in a quantity sufficient to assure that incident unpolarized light is propagated through two elliptical modes, and that both vectors of light are absorbed. The amount of helichromic compound required to induce such a pitch is dependent upon the size of the helichromic compound and the number of helical ordering sites. A longer helichromic molecule will result in a twisted helix formation at a lower concentration than will a relatively shorter helichromic molecule. In addition, a helichromic dye molecule having two helical ordering sites will effect the twisted helix formation at a lower concentration than an analogous helichromic molecule having only one helical ordering site.

Typically, the quantity of helichromic compound which will assure absorption of both vectors of light is between 1 and 5 percent and preferably 2 and 3 percent by weight of the bulk nematic liquid crystal material.

The helichromic compounds of the present invention have, in general, relatively high values of the optical order parameter S. This parameter is a measure of the efficiency with which the compound is oriented by the liquid crystal material and is directly related to the contrast one observes when viewing the device. In general, dyes having high optical order parameters produce displays having high contrasts. The determination of the optical order parameter, S, is discussed in the Journal of Applied Physics, Vol. 45, No. 11, 4718—23 (1974).

$$S = \frac{A_0 - A_1}{A_0 + 2A_1},$$

wherein $A_0$ is the absorbance in the absence of an electric field and $A_1$ is the absorbance in the presence of an electric field. S is a value something less than 1 and preferably is very close to 1. Values of S greater than 0.5 and preferably greater than 0.65 insure contrasts of between 5:1 and 10:1.

The S values and absorption maximum for several of the helichromic compounds of the present invention are shown in Table I.

TABLE I

| Helichromic Compound | (nm) | S |
|---|---|---|
| 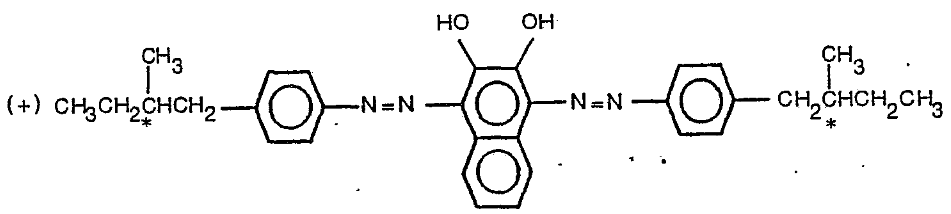 | 580 | 0.72 |
| 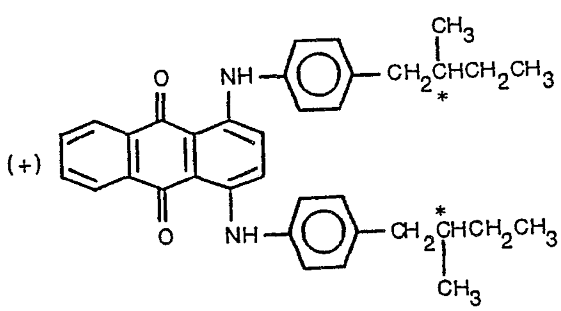 | 625 | 0.63 |
| 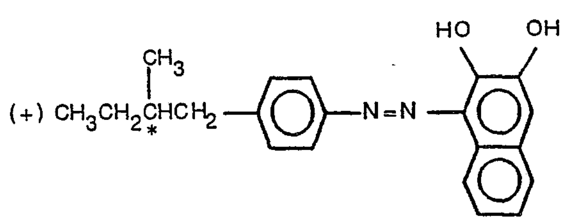 | 450 | 0.60 |

The helichromic dyes of the present invention are generally more stable than the optically-active cholesterol derivatives typically used in phase change devices. The helichromic dyes of the present invention are chemically-photochemically stable in liquid crystal display systems, i.e., moisture and ultraviolet light will not readily destroy the molecule, as is the case with certain cholesterol derivatives, such as cholesteryl nonanoate.

In addition, since the helichromic dyes of the present invention are not themselves liquid crystalline, they do not substantially alter the thermodynamic properties of the liquid crystal mixture to which they are added, as do traditional optically active additives.

Another significant advantage of devices utilizing the helichromic dyes of the present invention is that the liquid crystal material need be adulterated with relatively less foreign additive, i.e. helichromic compound than do conventional phase-change devices, thereby reducing potential sources of device decomposition. In general, substantially more dichroic dye and optically active material must be present in phase-change displays to attain equivalent contrast as compared to displays containing only between 0.1 and 5% by weight helichromic compound.

The helichromic displays of the present invention provide a significantly improved display due, in part, to the elimination of after-image scattering. The elimination of after-image scattering is illustrated in Fig. 2.

Referring to Fig. 2, the solid line *F* represents the optical response of a conventional "phase-change" type liquid crystal display containing "E—7" nematic liquid crystal material, 2 percent by weight of a dichroic dye mixture comprising

0.68% by weight 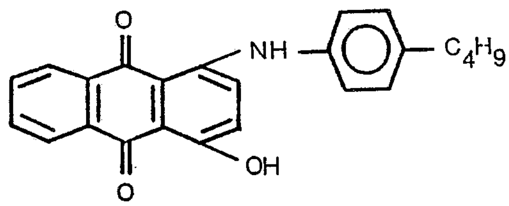

0.66% by weight 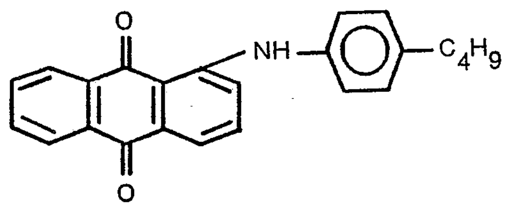 and

0.66% by weight 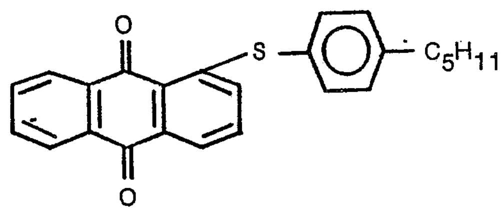

and 10 percent by weight of the optically-active additive, cholesteryl nonanoate. The dotted line *G* represents the optical response of a display containing the same "E-7" nematic liquid crystal material and 2 percent by weight of a mixture of helichromic compounds analogous to the dichroic dye mixture in the phase-change device. The helichromic mixture comprises

0.68% by weight 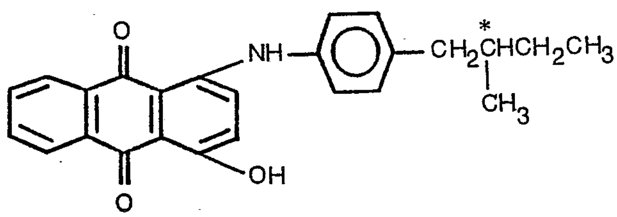

(made according to the procedure of Example 29)

0.66% by weight 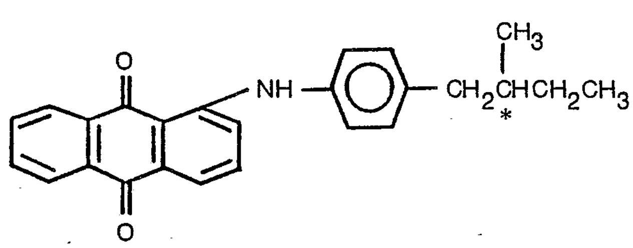

(made according to the procedure of Example 27) and

0.66% by weight 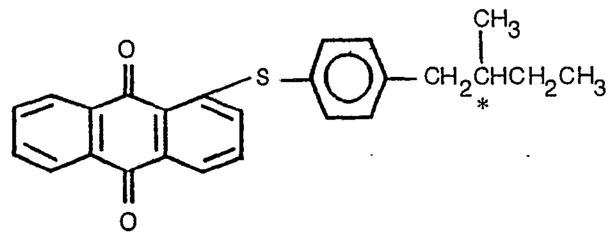

Each display was illuminated and subjected to a voltage of 10V at time 0. After 200 milliseconds the voltage across each cell was reduced to 0. The resultant optical response of each cell was traced with an oscilloscope and appears as Fig. 2. The cell containing the helichromic dye exhibited no after-image scattering of light approximately 75 milliseconds (T=275 ms.) after the voltage was eliminated. In comparison the cell containing the dichroic dye and cholesteryl nonanoate continued to show significant after-image scattering of light even 700 milliseconds (T=900 ms.) after the voltage was removed. Thus, Fig. 2 illustrates that phase change displays utilizing the helichromic dyes of the present invention have rapid decay times with no after-image scattering as compared to the "phase-change" displays of the prior art. Note that the relative optical contrast in both the on and off states were equivalent for the two displays.

By use of the helichromic compounds of the present invention the voltage required to produce a device having an equivalent contrast is less than one-half that required with a conventional "phase-change" composition. Table II illustrates the relatively low voltage requirements of helichromic displays.

TABLE II

| | Contrast Ratio | Brightness | Voltage Required (rms) |
|---|---|---|---|
| Conventional phase change device utilizing 10% cholesterol nonanoate in "E-7". | 5:1 | 30% | 30 |
| Device utilizing the 2% helichromic compound "E-7" | 5:1 | 30% | 7 |

Fig. 1 illustrates that helichromic displays require less voltage to reach any particular perceived contrast ratio than do conventional phase-change compositions. Curves C, D, and E represent the optical response of cells containing 4.5 percent by weight of the dichroic dye mixture used for Fig. 2, and 4, 8 and 12 percent by weight cholesteryl nonanoate, respectively, in "E-7" liquid crystal material. Dotted curves A and B represent the optical response of cells containing 1 and 3 percent by weight, respectively, of the mixture of helichromic compounds used for Fig. 2 in "E-7". The voltage required to reach any particular contrast ratio (the threshold voltage), is relatively lower for the helichromic devices than for any of the phase-change devices. In addition, Fig. 1 illustrates that helichromic displays require less foreign additives than traditional phase-change displays to reach any particular perceived contrast ratio.

Helichromic compounds of the present invention may be utilized in so-called "guest-host" liquid crystal displays, when present in concentrations insufficient to provide the mixture with helical ordering characteristics. The construction of "guest-host" liquid crystal displays is described in *Applied Physics Letters,* Vol. 13, pages 91—92 (1968). In guest-host devices a "host" liquid crystal material has its orientation controlled by the application of electrical fields and in turn interacts with "guest" dichroic dye molecules to induce a cooperative conforming alignment.

Guest-host type displays in the "off" state require one polarizer to absorb one polarization of incident light while the guest dichroic material in the display absorbs the other polarization. In the "on" or "bright" state the host liquid crystal material, and thus the guest dye molecules, are oriented by the electric field so that the dichroic dye molecules assume their essentiallly nonabsorbing state.

The concentration of helichromic compound required to be present in guest-host displays is between about 0.5 and 2 percent by weight of the bulk nematic liquid crystal material.

Helichromic compounds are useful in guest-host displays not only to provide a dichroic dye moiety which will absorb one polarization of light but are simultaneously useful in these displays to eliminate the well known problem of "optical bounce" or "reverse twist" without the use of the optically active doponts utilized in guest-host displays of the prior art. "Optical bounce" is a hydrodynamic effect which hinders the ability of the display to return precisely to the relaxed (no image produced) state, when the voltage across the display is terminated. This phenomenon is discussed in Ann. Phys., *19,* 273 (1972).

The helichromic dyes of the present invention may also be utilized in traditional twist nematic liquid crystal displays to eliminate "optical bounce" and thus reduce the decay time of the device. The

construction and operation of twist nematic type displays is well documented in the art, e.g. U.S. 3,918,796. These devices alternate between transmission of light and no transmission of light depending upon whether a voltage is applied across the cell.

The contents of a traditional twist nematic cell of the prior art comprises liquid crystalline material and optionally between 1/2 and 3% by weight of an optically-active additive which eliminates optical bounce and reduces decay time. The present invention contemplates the use of between about 0.1 and 1% by weight helichromic compound in order to reduce optical bounce and eliminate the need to utilize optically-active liquid crystalline additives.

The use of helichromic compounds to replace the optically-active dopants conventionally used in guest-host and twist nematic displays eliminates the problems associated with these additives as discussed hereinabove. In addition, the concentration of helichromic compound required to eliminate optical bounce is lower than when conventional optically-active liquid crystal additives are used, thus additionally reducing possible liquid crystal cell degradation.

The following examples illustrate compositions and devices in accordance with the invention. It should be understood that this is done solely by way of example and is intended neither to delineate the scope of the invention nor limit the ambit of the claims. Examples 1—12 describe intermediates useful in the preparation of the helichromic dyes, described in Examples 13—28. Examples 29 and 30 illustrate the use of helichromic compounds in liquid crystal displays. In the examples which follow and throughout the specification, the quantities of material are expressed in terms of percentages of weight of the total composition, unless otherwise specified.

Example 1

The intermediate (+)-2-methylbutyl bromide was prepared by mixing (−)-2-methyl-1-butanol (300 gm 3.4 moles), with 100 ml. of pyridine. Over a period of 5 hours 513 gm (3.40 mole) of $PBr_3$ was added to the mixture. The temperature of the reaction mixture during the $PBr_3$ additions was maintained at 20—25°C. The product was then distilled under reduced pressure to give 485 gm of crude (+)-2-methylbutyl bromide. The crude material was dissolved in 1 l. of petroleum ether (b.p. 30—60°C) and was washed in succession with first 5% NaOH, then water, then 10% $H_2SO_4$, then concentrated $H_2SO_4$ and finally water again. After drying over anhydrous calcium sulfate the petroleum ether was stripped off and the product was fractionated at atmospheric pressure. (+)-2-methylbutyl bromide (397 gm) was recovered (b.p. 119—121°C). Nuclear Magnetic Resonance (NMR) and Infrared (IR) spectra confirmed the proposed structure of the product $[\alpha]_D^{20} = 3.9°$.

Example 2

The intermediate (+)-2-methylbutyl benzene was prepared by the procedure described hereinbelow.

*a) Preparation of the catalyst [dichloro-1,2-bis-(diphenyl-phosphino)-ethane]nickel (II).*

A solution of 1,2-bis(diphenylphosphino)ethane (4 gm), prepared according to the method of Tamao et al., J.A.C.S., *94*, 4735 (1974), dissolved in 400 ml warm ethyl alcohol was added to 2.4 gm hydrated nickel chloride in 20 ml ethyl alcohol. The product crystallized as dull orange needles.

*b) Preparation of (+)-2-methylbutyl magnesium bromide.*

Magnesium turnings (38.3 gm) were placed in a dry 2 liter flask equipped with dropping funnel, nitrogen inlet, and stir bar. Dry nitrogen was led in and the magnesium turnings were subjected to stirring overnight.

(+)-2-methylbutyl bromide (5 gm), prepared according to the procedure of Example 1, in 125 ml dry ether was run into the flask followed by 221.7 gm (+)-2-methylbutyl bromide in 1 liter of ether which was dropped in at a rate sufficient to maintain the reaction. The Grignard reagent was refluxed for one hour after addition was completed.

*c) Preparation of (+)-2-methylbutyl benzene.*

To a mixture of the nickel catalyst prepared in step (a) (208 gm, 0.39 mmol), chlorobenzene (135 mmol) and ether (50 ml) was added (+)-2-methylbutyl magnesium bromide (60 mmol), prepared in step (b), in 50 ml ether. The mixture was kept at 0°C, with stirring, over 10 minutes. The resulting mixture was heated to reflux for 20 hr. The reactants were cooled to 20°C and 10% hydrochloric acid was added to hydrolyze the mixture. Sodium chloride is added to saturate the aqueous layer and the water phase was extracted with 3—50 ml portions of ether. The combined extracts are washed with water, dried over calcium chloride, and concentrated in vacuo. The residue was distilled under reduced pressure and the product, which boiled at 91°C (25 mm Hg), was collected. The structure of the product was confirmed by NMR.

Example 3

Preparation of the intermediate (+)-4-(2-methylbutyl)-nitrobenzene

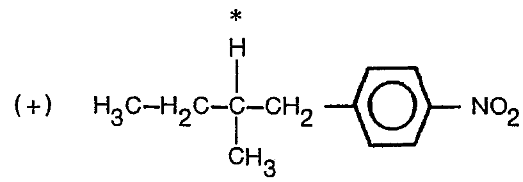

(+)-2-Methylbutylbenzene, prepared according to the procedure of Example 2, (0.75 mol, 111.0 gm) was added to 200 ml glacial acetic acid. This solution was added dropwise to a mixture of 420 ml 90% fuming nitric acid and 180 ml glacial acetic acid, which had been cooled at −20°C. Maintaining that temperature, the mixture was stirred for one hour and then poured into 2.5 l of ice water. The reaction products were extracted with 2—500 ml portions of petroleum ether (30°—60°C) and the combined extracts were successively washed with water (2—100 ml portions); 5% sodium hydroxide (2—100 ml portions), 10% sodium hydroxide (2—100 ml portions); and water (3—100 ml portions). The extract was dried over anhydrous calcium sulfate, the solvent was removed under reduced pressure and the resultant light yellow oil fractionated under reduced pressure. The fraction boiling at 158—160°C (14 mm Hg) was collected, giving a 38% yield of the product. The structure was confirmed by NMR.

Example 4

Preparation of the intermediate (+)-p-(2-methylbutyl) aniline

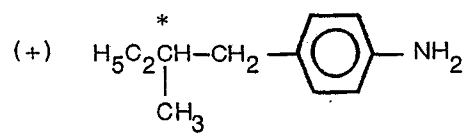

A mixture of (+)-4-(2-methylbutyl)nitrobenzene, prepared according to the procedure of Example 3, (0.152 mol, 29.4 gm), 90 ml anhydrous ethyl alcohol, 3.05 gm activated carbon and 0.032 gm ferric chloride hexahydrate was refluxed for 10 minutes. Hydrazine hydrate (12.16 gm) was then added through a dropping funnel over a period of 15 minutes. Reflux was continued for 5 hours and the mixture was filtered while still hot. The solvent was removed under reduced pressure leaving 24.5 gm of amber liquid. This was then added to a mixture of 75 ml HCl and 150 ml water. The mixture was extracted using 200 ml ether. The aqueous phase was rendered strongly alkaline using sodium hydroxide pellets and the oily product was extracted with ether. The ether extracts were dried over sodium hydroxide pellets and the ether was evaporated. The resultant amine residue was then distilled and a 77% yield of (+)-p-(2-methylbutylaniline having a boiling point of 89—90°C (1 mm Hg) was recovered. Confirmational analysis (NMR and IR) verified the product. $[\alpha]_D^{20} = 11.8°$.

Example 5

Preparation of the intermediate (+)4-(2-methylbutyl)-benzaldehyde

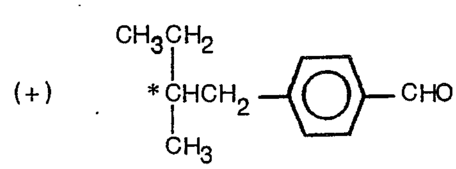

Trifluoroacetic acid (150 cc) was added to a flask containing 14.0 gm hexamethylenetetramine (HMTA). (+)2-methylbutylbenzene (14.8 gm) was then added and the mixture was refluxed for 21 hours. The deep orange mixture was distilled to remove excess trifluoroacetic acid. When about one third the volume remained, the mixture was poured into 600 ml ice water and stirred for 15 minutes. Sodium carbonate was added with stirring until the mixture was basic and the product was extracted with ether. The ether extract was washed with water and dried over sodium sulfate. The ether was removed leaving 18 gm crude (+)-4(-2-methylbutyl)benzaldehyde. This was vacuum distilled (78°C at 0.07 mm Hg). The structure of the product was confirmed by NMR. The yield of the product was 78%.

Example 6

The intermediate (+)-N-2-methylbutyl-α-naphthylamine was prepared by the procedure described below.

*a) Preparation of the secondary triflamide of α-amino naphthalene.*

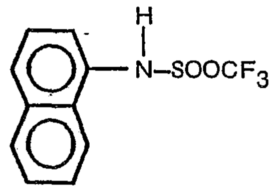

According to the method disclosed by Hendrickson et al. in *"Tetra.lett," 39,* 3839 (1973), 1 mole of α-naphthylamine (142.9 g) was dissolved in 750 ml dichloromethane and cooled to 0°C. Trifluoromethanesulfonic anhydride was then added dropwise, not allowing the temperature of the reaction mixture to rise above 15°C at any time during the addition. When the addition was complete, the reaction mixture was allowed to warm to 20°C and was then poured into 4 liters of ice water with rapid agitation. The organic phase was allowed to separate from the water phase and as much of the water layer as was possible was decanted. The remaining organic layer was extracted with three 500 ml portions diethylether. The drying agent was removed from the diethylether extracts by filtration and the diethylether was removed using a rotary evaporator. A 78% yield of trifluoromethanesulfonamido-α-naphthalene (300 gm) was recovered.

The above product was dissolved in 3 liters boiling carbon tetrachloride and 200 gm activated carbon was added. The mixture was immediately filtered while hot, and colorless platelets of pure triflamide of α-aminonaphthalene were recovered by filtration. The product was dried in an oven overnight. Pure triflamide of α-aminonaphthalene having a melting point of 112.9°C was recovered in an 80% yield. The structure of the product was confirmed by IR, NMR and mass spectroscopy.

*b) Preparation of the sodium salt of trifluoromethane-sulfonamido naphthalene.*

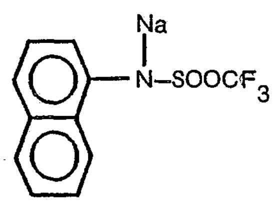

Sodium metal (4.91 gm) was dissolved in 200 ml absolute anhydrous ethanol and 58.7 gm of the triflamide of α-amino naphthalene prepared in step (a) was added. The compound dissolved immediately and the mixture was refluxed, for 30 minutes. The flask containing the reaction mixture was then fitted with a Dean-Stark water collector and an addition funnel. The volume of solvent ethanol was reduced by approximately 50% and the reflux temperature was recorded at 74°C. 200 ml benzene was added and the reflux temperature dropped to 64°C. The azeotrope was selectively removed from the trap and when the remaining volume in the flask was about 100 ml, 200 more mls of benzene was added. The salt began to crystallize in the reflux when the reflux temperature was about 80°C indicating removal of ethanol and water. The flask was removed from the trap and the remaining benzene was removed by a rotary evaporator yielding 63 gm of the sodium salt of trifluormethanesulfonamido naphthalene in a 99.2% yield. The structure of the product was confirmed by an IR spectra.

*c) Preparation of (+)-N-(2-methylbutyl)-N-trifluoromethylsulfonyl-α-naphthylamine*

(+) 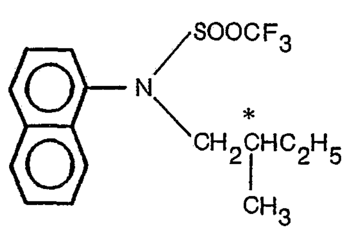

62.91 gm of the product obtained in step (b), 45 gm potassium iodide and 45 gm (+)-2-methylbutylbromide, prepared according to the procedure of Example 1, were dissolved into 500 ml dimethylformamide and refluxed 66 hours. The reaction mixture, containing precipitated KBr, was drowned in 1 liter water and extracted with 500 ml chloroform. The chloroform solution was dried using magnesium sulfate

and the chloroform was removed using the rotary evaporator. The oily product remaining is vacuum distilled at 1 mm of mercury. The product collected at 150—180°C was the desired product (+)N-(2-methylbutyl)-N-trifluoromethylsulfonyl-α-naphthylamine.

*d) Hydrolysis of (+)-N-(2-methylbutyl)-N-trifluoromethylsulfonyl-α-naphthalmine to yield (+)-N-(2-methylbutyl)-α-naphthylamine.*

(+) 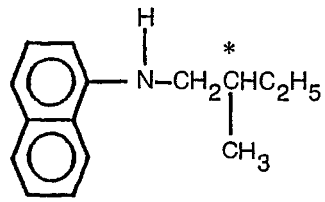

The drying agent calcium hydride (10 gm) was allowed to stand overnight in 1 liter of diglyme. The dried diglyme was decanted into a flamed out distilling flask and lithium aluminum hydride was added in small portions until no further effervesence occurred upon addition. The diglyme was then distilled at 2000 Pa (15 mm Hg), bp 62—3°C, making sure only 500—600 ml were distilled into the receiving flask. This diglyme was stored over dry $N_2$.

A 500 ml round bottom flask fitted with a condenser, mechanical stirrer, and addition funnel fitted with drying tubes, was flame dried and charged with 400 ml of the dry diglyme. 180 ml 1M lithium aluminum hydride in diethylether was poured into the addition funnel and slowly added to the diglyme. A white precipitate formed which redissolved upon warming the mixture. The mixture was then heated and the diethylether removed from the diglyme. The temperature of the diglyme/lithium aluminum hydride solution was kept at 105°C.

1.5 gm of the product of step (c) was dissolved in 100 ml of the dry diglyme and placed into the addition funnel. This solution was then slowly dropped into the hydride solution and when the addition was complete the funnel was removed, the thermometer added, and the temperature raised to a constant 110°C. The reaction was allowed to proceed for 16 hours and the resultant cloudy yellow mixture was allowed to cool to 20°C.

The reaction mixture was transferred to a large 1 liter dropping funnel and slowly dropped into 1 liter of water with constant stirring. The mixture was diluted to 6 liters with water and one liter at a time was extracted with 500 ml portions of diethylether. In each extraction 100 ml of a 25% by weight NaOH in water solution was added during the extraction. The combined ether extracts were washed twice with 1 liter water and were dried with magnesium sulfate.

The ether was removed by vacuum evaporation and the remaining oil was distilled from NaOH pellets at reduced pressure. The fraction boiling over at 93.3 Pa to 133 Pa (0.7 to 1.00 mm Hg), 144—153°C, was the desired product in 80% yield. The structure of the product was confirmed by IR and NMR.

Example 7

Preparation of the intermediate (+)-N-citronellyl-α-naphthylamine

(+) 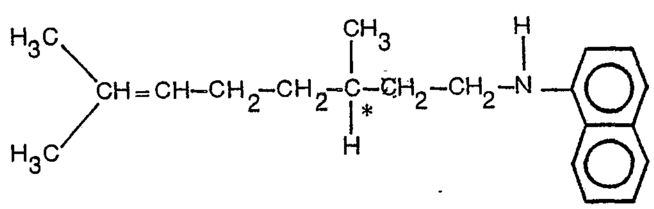

was prepared according to the procedure disclosed by Borsch et al. in J.A.C.S., *93*, 2897 (1971).

2.0 g α-naphthylamine (14 mmol) and 0.01 gm α-naphthylamine-HCl were added to 25 ml absolute methanol along with 2.15 gm citronellal (14 mmol) and stirred for five minutes, after which the solution turned hazy. Then 0.53 gm (8.4 mmol) sodium cyanoborohydride was added and a brief exotherm occurred. The mixture was stirred overnight at room temperature. The bottom organic layer was separated from the top aqueous layer. An IR spectra of the organic layer (a brown oil) showed no carbonyl group and very little absorption in the OH/NH region (330—360 nm). Upon vacuum distillation of the organic layer the component having a bp of 175—180°C was collected. The desired product was recovered as a pale yellow oil in 21% yield. The structure of the amine product was confirmed by NMR.

Example 8

Preparation of the intermediate (+)-N-camphanyl-α-naphthylamine

(+) 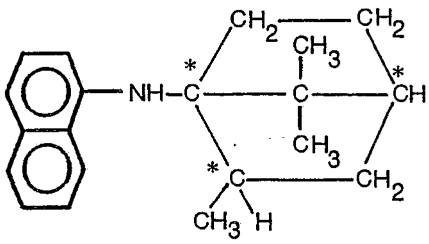

Camphor (10 gm), 9.4 gm α-naphthylamine, 0.1 gm α-naphthylamine-HCl and 30 gm 1Å molecular sieves were added to 40 ml anhydrous methanol. Sodium cyanoborohydride (2.5 gm) was added dropwise and stirred under $N_2$ for 48 hours. The sieves were removed by filtration and 5 drops of concentrated HCl were added to the filtrate until it was acidic (pH < 7). The solvent was stripped by boiling and 10 gm potassium hydroxide was added to the remaining mixture. The aqueous phase was extracted with ether over potassium carbonate. The extractions were filtered to remove the potassium carbonate. After the ether was evaporated, the mixture was distilled under high vacuum. The material boiling at 120°C and 0.1 mm of mercury was collected. IR spectra verified that this material was the product.

Example 9

Preparation of the intermediate (+)-N-(3-methylcyclohexyl)-α-naphthylamine

(+) 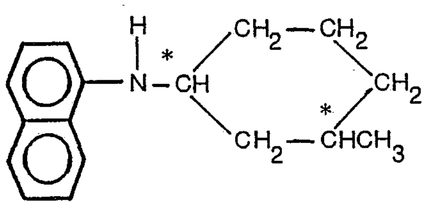

The procedure described in Example 8 was repeated except that the 10 gm of camphor was replaced by 7.4 gm of 3-methylcyclohexanone. The material boiling at 145°—160°C and 0.1 mm of mercury was collected. IR spectra verified that this material was (+)-N-(3-methylcyclohexyl)-α-naphthylamine.

Example 10

Preparation of the intermediate (+)-4-methylhexylaniline

(+) 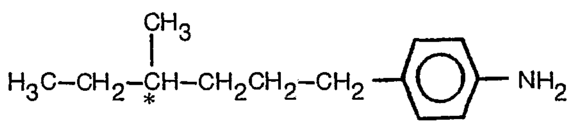

Using the procedure of Example 1, (+)-4-methylhexan-1-ol is converted to the corresponding optically-active bromide. Then, according to the procedure of Example 2, the optically-active bromide is converted to (+)-4-methylhexylbenzene. Then, following the procedures described in Examples 3 and 4, the (+)-4-methylhexylbenzene is nitrated and reduced to (+)-4-methylhexyl aniline. The structure of the product is confirmed by NMR.

Example 11

Preparation of the intermediate (+)-p-(2-methylbutyl)phenylazo-[2,5]-dimethylphenylazo-[2,5]-dimethylaniline

(+) 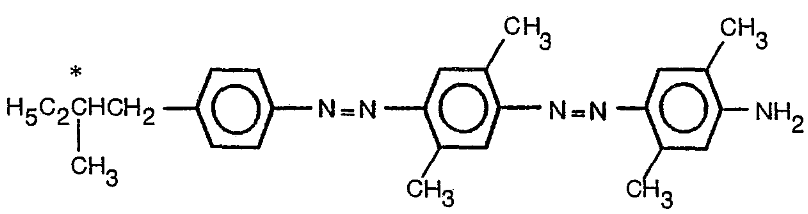

(+)-p-(2-methylbutyl)aniline (16.1 gm), prepared according to Example 4, was dissolved in 100 ml concentrated hydrochloric acid and 50 ml of water was added to disperse the acid salt. The slurry was

cooled to 0°C and diazotized by adding dropwise 6.9 gm $NaNO_2$ in 30 ml water. After the completion of diazotization, as indicated by starch-iodide paper, the clear diazonium is added to a mixture of 12.1 gm 2,5-dimethylaniline in 100 ml glacial acetic acid. Coupling occurred and a saturated sodium acetate solution was added to adjust the pH to 5.0. The bridht red product was collected by filtration and redispersed in 50 ml water. A solution of 20% by weight sodium carbonate in water was added until the pH was greater than 7. The product was filtered, washed and dried to yield (+)-p-(2-methylbutyl)phenylazo-[2,5]-dimethylaniline in 85% yield.

The above product (28 gm) was dissolved in 100 ml 87% sulfuric acid in water and diazotized by the dropwise addition of nitrosylsulfuric acid at 10°C until diazo formation was complete. To this solution was added 12 gm 2,5-dimethylaniline dissolved in 25 ml glacial acetic acid. After coupling was complete the mixture was diluted with ice water and neutralized using a 20% by weight sodium hydroxide solution. The helichromic intermediate was recovered by filtration in a 60% yield. The structure of the helichromic intermediate was confirmed by NMR.

Example 12

Preparation of the intermediate (+)-p-(2-methylbutyl)phenylazo-(phenylazo)aniline

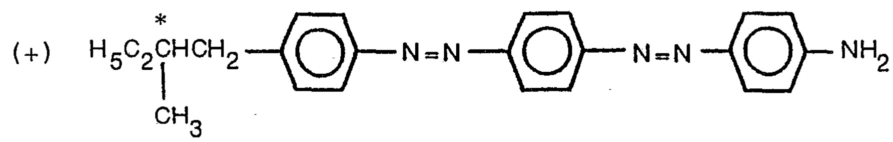

This intermediate was prepared according to the procedure of Example 11 by substituting aniline for the 2,5-dimethylaniline.

Preparation of Helichromic Compounds

Example 13

Helichromic (+)-1-[4-(2-methylbutyl)phenylazo](2-hydroxy)naphthalene.

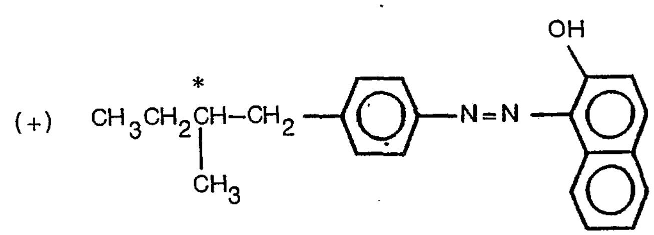

(+)-4-(2-methylbutyl)aniline prepared according to the procedure of Example 4, (0.012 mol, 2.0 gm) was dissolved in 5 ml concentrated hydrochloric acid and 5 ml water. Upon cooling to 0°C, sodium nitrite (0.015 mol, 0.85 gm) was added slowly while maintaining the temperature at 0—5°C. When the amine was completely diazotized (a negative reading on starch-iodide paper), coupling was effected by slowly adding the cold diazonium solution to an ice cold solution of 2-naphthol (0.012 mol, 1.72 gm) dissolved in 10 ml 10% NaOH. Immediately an orange precipitate of the azo formed. After 30 minutes the precipitate was filtered, washed with water, vacuum dried and recrystallized from 50 ml of methyl alcohol. The orange colored needles melted at 74—75°C ,$\lambda_{max}^{CHCl_3}$ = 490 nm. Elemental analysis confirmed the structure of the product.

Example 14

Helichromic (+)-1-methylamino-4-[4-(2-methylbutyl)anilino] anthraquinone

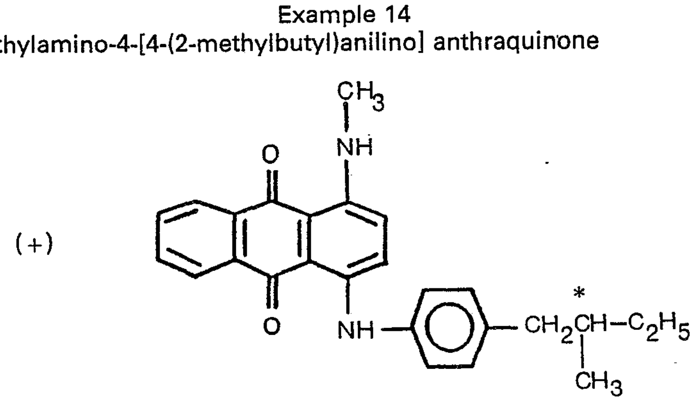

was prepared by mixing 2.0 gm (0.0063 mol) of 1-methylamino-4-bromo-anthraquinone, 2.51 gm (0.0063

mol) of (+)-4-(2-methylbutyl)aniline (prepared according to the procedure of Example 4), 2.6 gm of potassium acetate and 0.05 gm of hydrated copper acetate in 10 ml of nitrobenzene and heating under nitrogen at 160—170°C for a period of about 8 hours. Nearly all the nitrobenzene was then distilled off under vacuum in an oil bath heated to 125°C. After cooling to room temperature 100 ml of toluene was added to dissolve the colored produced and the insoluble material was filtered off. The toluene filtrate was then chromatographed on silica gel using toluene as an eluent. Fractions containing the deep blue product were combined, stripped of solvent, and the residue was crystallized from ethanol giving 1.5 gm dark purple iridescent crystals, m.p. 95—7°C. $\lambda_{max}^{CHCl_3}$ of 647 and 603 nm and NMR and IR analysis confirmed that the product obtained was (+)-1-methylamino-4-[4-(2-methylbutyl)anilino] anthraquinone.

Example 15

Helichromic 4-(N,N'-dimethylamino benzylidene)-4'-(2-methylbutyl)-aniline

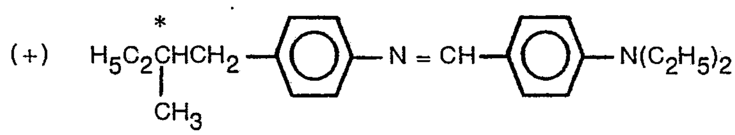

was prepared by mixing 3.26 gm (0.02 mol) (+)-4-(2-methyl-butyl)aniline (prepared according to the procedure of Example 4) 3.55 gm (0.02 mol) p-N,N'-diethyl-aminobenzaldehyde and 6 gm of "Linde" molecular sieve 3A (available from the Linde Corp., N.Y., N.Y.) in 20 ml of methanol and refluxing the mixture under a nitrogen blanket for 1-1/2 hours. The sieves were then filtered off, washed with methanol and stripped of solvent on a rotary evaporator under reduced pressure, leaving a viscous yellow oil. This oil was vacuum distilled twice, b.p. 221—3°C/0.3 mm, giving a yellow oil which solidified upon cooling. NMR and IR spectra confirmed the structure of the product.

Example 16

(+)Bis(1,1'-(2-methylbutyl)phenylazo)[-4,4'-azonaphthyl)azophenyl]azobenzene

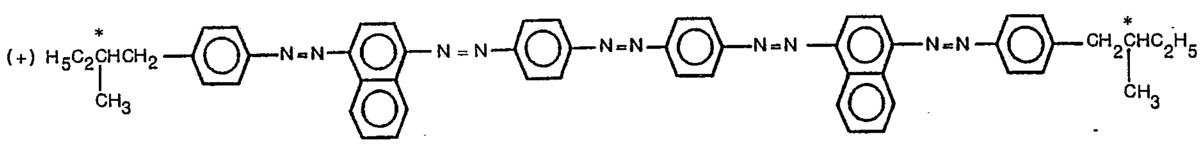

Azodianiline (0.1 mol, 2.1 gm) was tetrazotized using 2 equivalents (1.4 gm) sodium nitrite in 20 ml concentrated hydrochloric acid at 0°C. Two equivalents 1-naphthylamine were dissolved in 40 ml 1:1 glacial acetic/formic acid and cooled to 0°C to produce a coupling solution. The clear tetrazonium solution was stirred into the coupling solution and the mixture was stirred 90 minutes at 0—5°C. The bis-naphthyl intermediate was recovered and converted to the bis-nitroso derivative using Caros acid. Two equivalents (3.2 gm) (+)-4-(2-methylbutyl)aniline, prepared according to Example 4, were coupled by stirring the bis-nitroso derivative into the chiral aniline in glacial acetic acid at 0°C. Upon completion of coupling the solution was neutralized using sodium carbonate and the precipitated helichromic compound was recovered by vacuum filtration. The helichromic dye was purified by chromatography on silica gel using methylene chloride.

Example 17

(+)-4-(2-methylbutyl)-4'-(5-nitrothiazolylazo)azobenzene

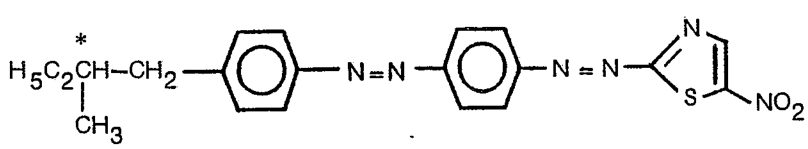

5-nitro-2-amino-thiazole was diazotized in mineral acid using sodium nitrite and coupled in the conventional manner with one equivalent aniline. Recovery of the free base of the monoazo dye and subsequent condensation of one equivalent of thin dye with one equivalent (+)-4(-2-methylbutyl)4'-nitrosobenzene in a minimum quantity of glacial acetic acid affords the helichromic dye upon recovery from the reaction mixture. Column chromatography on alumina using chloroform yields the pure dye.

Example 18

Helichromic (+)-1,4,5-tri[4-(2-methylbutyl)phenylanilino]anthraquinone

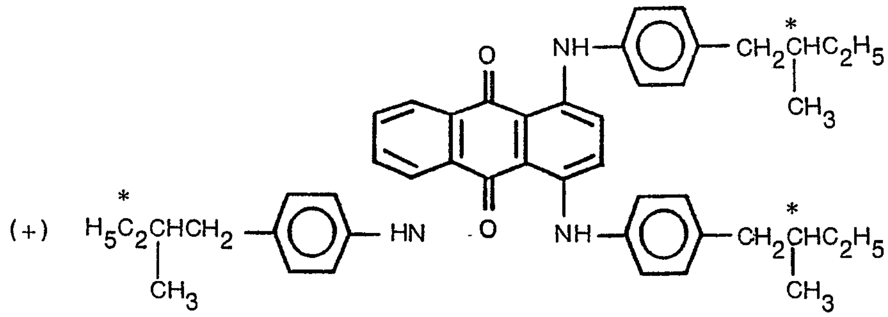

1,4,5-Trichloroanthraquinone (1.56 gm 0.005 mol) prepared by the method of A. Goldbergm J.C.S., 1791 (1931) was dissolved in 20 ml of hot nitrobenzene. Then 4.9 gm (0.03 mol) of (+)-4-(2-methylbutyl)aniline, 5.8 gm of potassium acetate and 0.1 gm of copper acetate were added. The mixture was then heated under nitrogen slowly to 200°C and the course of the reaction was followed by thin layer chromatography (TLC) on silica gel with 1:1 toluene/hexane. When the mixture was predominantly the tri-substituted dye (TLC-cyan spot) heating was continued for another 15 minutes at 215°C. The mixture was then cooled. The reaction mixture was diluted with 250 ml of methanol and a dark blue viscous material separated. This was chromatographed twice using silica gel and 1:1 toluene/hexane as an eluant. The fractions containing the cyan dye were combined and stripped of solvent leaving a viscous residue. The viscous material was then heated under high vacuum to remove any solvent and on cooling, the dye solidified. TLC, NMR and IR analysis indicated this was the desired, essentially pure, tri-substituted dye.

Example 19

Helichromic(+)-2-[4-(2-methylbutyl)benzylidene)-1-Ethyl-1,2-dihydroquinoline

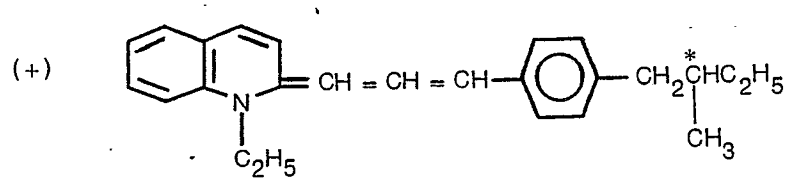

(+)-4-(2-methylbutyl)aniline can be converted to the corresponding (+)-4-(2-methylbutyl)fluorobenzene by the well-known Schiemann reaction. By refluxing a mixture of 0.1 mole of the fluorobenzene derivative and 0.1 mole of quinaldine ethyltosylate in 100 ml of acetonitrile and 0.2 mole of diisopropylethylamine for 5—6 hrs, the arylidene dye is formed. The dye can be isolated and purified by column chromatography.

Example 20

Helichromic (+)-Bis-1,5-(α-methylbenzylamino)anthraquinone

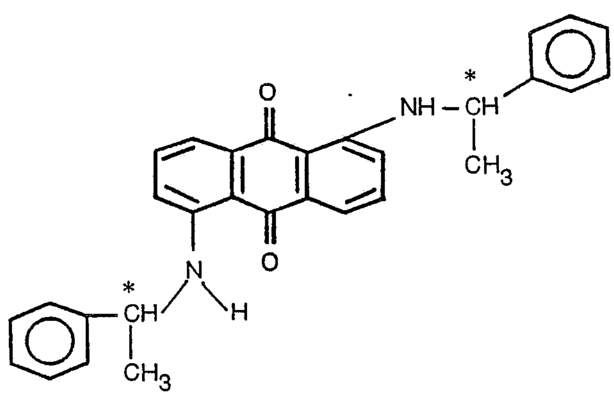

Five gm of 1,5-dichloroanthraquinone was combined with an excess (10 gm) of (+)-α-methylbenzylamine ($[\alpha]^{23} = +38°$) and heated at 150°C for 4 hours. Column chromatography using silica gel and toluene as the eluent, and recrystallization 3 times from hexane yielded the pure desired product.

The pure product had a melting point of 134—136°C and its structure was confirmed by NMR.

Example 21

Helichromic (+) 4-phenylazo-4'[4-(3-methylcyclohexylamino)]naphthylazo azobenzene

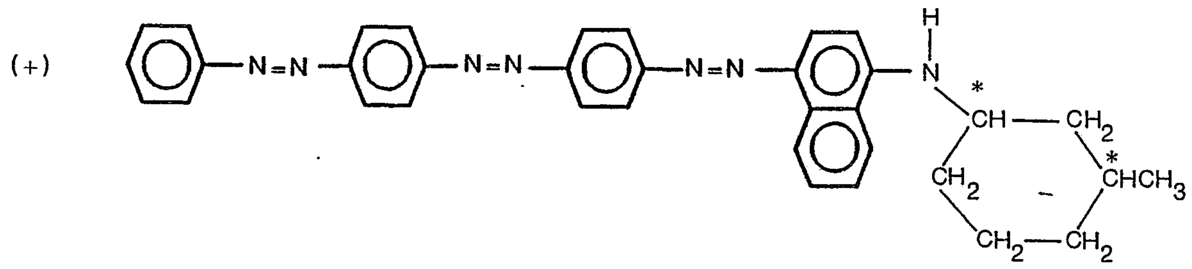

Phenylazo aniline (0.1 mol) was dissolved in 50 ml of a 20% HCl in water solution and cooled to 0°C in an ice bath. This compound was diazotized using 0.1 mole of sodium nitrite in 20 ml of water, added dropwise. When diazotization was complete coupling was effected by stirring the product into 0.1 mole of (+)-N-(3-methylcyclohexyl)-α-naphthylamine, prepared according to the procedure of Example 9, in 50 ml of glacial acetic acid. After coupling had occurred the mixture was neutralized using a 20% by weight solution of NaOH in water, and filtered. The pure helichromic compound was recovered by chromatography on silica using 4:1 toluene/methanol as the eluent. IR and NMR confirmed the structure of the product ($\lambda_{max}$ in toluene (Tol) was 520 nm).

Example 22

Helichromic (+)-Bis-(citronellyl)aminonaphthyl- azo dye

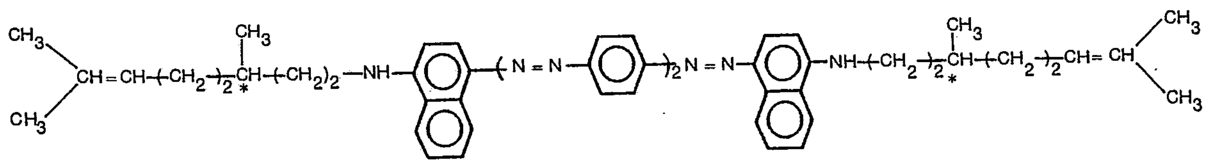

Two equivalents of the intermediate prepared in Example 7 were coupled to 1 equivalent of tetrazotized azodianiline per the procedure described in Example 16. The resulting blue helichromic dye was purified by chromatography on alumina using 4:1 toluene/methanol as the eluent. The structure of the product was confirmed by IR and NMR ($\lambda_{max}^{Tol}$ = 595 nm).

Example 23

Helichromic (+)-1,4-diaminoanthraquinone-N-(2-methylbutyl)-2,3-dicarboximide

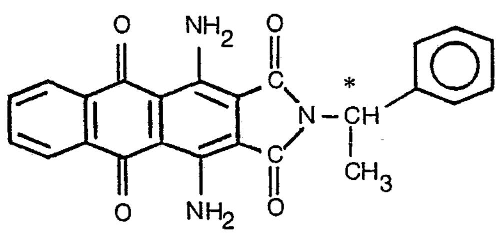

*a) Preparation of 1,4-diamino-2,3-anthraquinone-dicarbonitrile*

According to the procedure disclosed in German Patent No. 1,108,704, to 750 ml water was added in succession 18 gm sodium cyanide, 0.3 gm ammonium vanadate, 3.2 gm sodium acetate trihydrate, and 14 gm 1,4-diamino anthraquinone-2-sulfonic acid. This mixture was stirred and heated at 90°C for 1 hour. Air was then bubbled through the mixture and after 4 hours a blue precipitate was recovered by filtration. This precipitate was water washed and oven dried to recover the desired product in quantitative yield.

*b) Preparation of 1,4-diamino-2,3-anthraquinone dicarboximide.*

According to the procedure described in U.S. Patent No. 2,753,356, to a hot (80°C) stirred solution of 630 parts by weight 98.2% sulfuric acid in water, 126 parts by weight dried powdered 1,4-diamino-2,3-anthraquinone-dicarbonitrile, prepared according to Step (a) above, is added. An exothermic reaction occurs with the temperature rising to 140°C. The mixture is heated for 1 hour at 150°C and is then cooled to about 40—45°C. Keeping the mixture at this temperature, enough water (255 parts by weight) is added dropwise to make a 70% by volume acid solution. After cooling to room temperature, orange crystals are obtained and are separated by filtration. The orange crystals are washed with a 70% solution of sulfuric

acid in water. The orange crystals are then slurried with water, keeping the temperature at about 70 to 80°C, for 90 minutes during which time the crystals changed from an orange to a blue color. The blue crystals are separated by filtration and are washed with hot water until the filtrate was acid free. After drying the product 1,4-diamino-anthraquinone-dicarboximide is obtained in a 73% yield.

*c) Preparation of 1,4-diaminoanthraquinone-N-(2-methylbutyl)-2,3-dicarboximide.*

Also according to the procedure described in U.S. Patent No. 2,753,356, a mixture of 40 parts by weight 1,4-diamino anthraquinone-2,3-dicarboximide, prepared according to Step (b) above, 14 parts by weight (+)-2-methylbutylamine, 158 parts by weight methanol and 240 parts by weight nitrobenzene is heated for 16 hours at 175°C. The mixture is cooled to room temperature and the desired product is isolated by filtration. After washing with methanol and then water, the product yield is 90% of theoretical. The structure of the product is confirmed by NMR.

Example 24

Helichromic (+)-2-[6-methoxybenzothiazolylazo]-5-[4-(2-methylbutylamino)naphthylazo]-1,4-dimethylbenzene

(+) 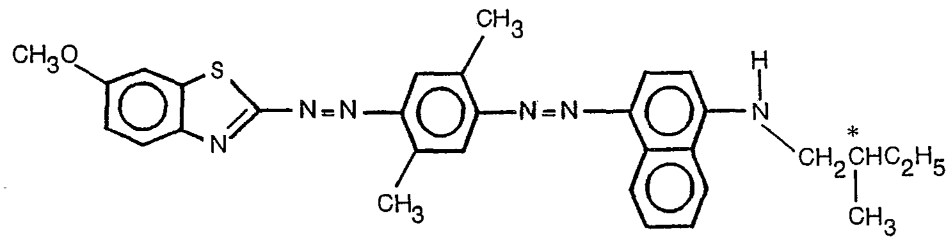

6-methoxy-2-aminobenzothiazole (5 gm) was dissolved in 120 ml dry 1,4-dioxane and the solution was warmed on a water bath to 60°C. Subsequently 4.05 ml of isoamyl nitrite, dissolved in 20 ml 1,4-dioxane was allowed to flow quickly into the reaction solution. Immediately, drop by drop, within a 25 minute period, 110 ml of a 1.5 molar sodium propanolate solution in n-propanol was added. The precipitate was filtered off with suction, digested with ether and dried. The 6-methoxybenzothiazole-2-diazotate as the monohydrate was recovered in 70% yield. The structure of the monohydrate was confirmed by NMR.

2.45 gm of the above compound was dissolved in 50 ml warm, distilled water and cooled to 10°C. 1.21 gm of 2,5-dimethyl aniline was dissolved in 100 ml glacial acetic acid. The diazotate solution was then dropped into the stirred acetic acid solution of amine. Immediately the bright red coupled product separated and an hour after the addition was completed the addition of 250 ml water separated the dye intermediate. A 20% by weight solution of sodium hydroxide in water was added until the pH was neutral (approximately 7) and the product was removed by filtration, washed with water, and dried at room temperature. The structure of the product was

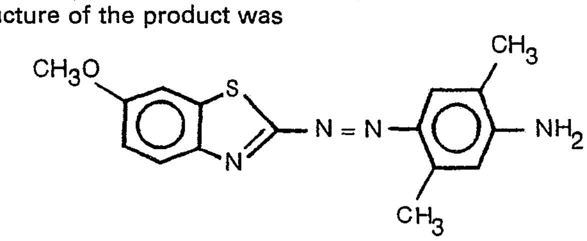

The above compound (4.56 gm) is dissolved in 40 gm of a 40% solution of nitrosylsulfuric acid, cooled to 0°C and allowed to diazotize for 4 hours. Upon completion of the diazotization, the solution is poured into a solution of 3.4 gm (+)-N-(2-methylbutyl)-α-naphthylamine, prepared according to Example 6, in 50 ml glacial acetic acid. After allowing coupling to proceed for about 2 hours, sodium acetate is added to raise the pH to 5. Neutralization of the mixture to pH 7 with a solution of 20% by weight sodium hydroxide in water, followed by filtration and water washed yields the helichromic dye. The structure of the dye is confirmed by NMR.

Example 25

Helichromic (+)-1-(naphthylthiazolylazo)-4-[4-(2-methylbutylamino)naphthylazo]benzene

(+) 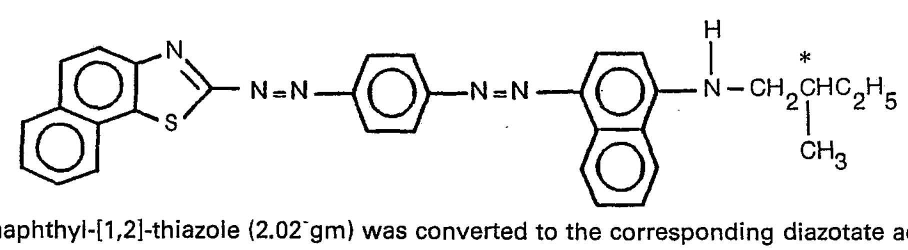

2-amino-naphthyl-[1,2]-thiazole (2.02 gm) was converted to the corresponding diazotate according to

the procedure of Example 24. 2.38 gm of the diazotate was dissolved in 50 ml water at room temperature and slowly dropped into 100 ml of a 30% sulfuric acid in water solution containing 0.9 gm aniline. The coupling action occurred immediately and upon neutralization with a 30% by weight solution of sodium hydroxide in water the product was filtered and washed with water. 3 gm (90% theoretical) of the desired dye intermediate was obtained. The structure of the intermediate was

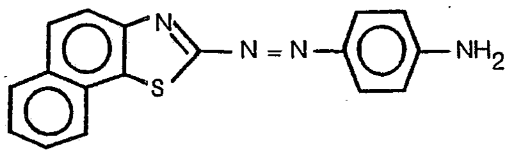

1.6 g of the above intermediate was diazotized in cold nitrosylsulfuric acid solution and coupled to one equivalent (1.74 gm) (+)-N-(2-methylbutyl)-α-naphthylamine, prepared according to the procedure of Example 6, which had been dissolved in 50 ml glacial acetic acid. The desired blue helichromic compound was recovered by filtration. The structure of the product was confirmed by NMR.

Example 26

Helichromic (+)3-methylcyclohexyl dye

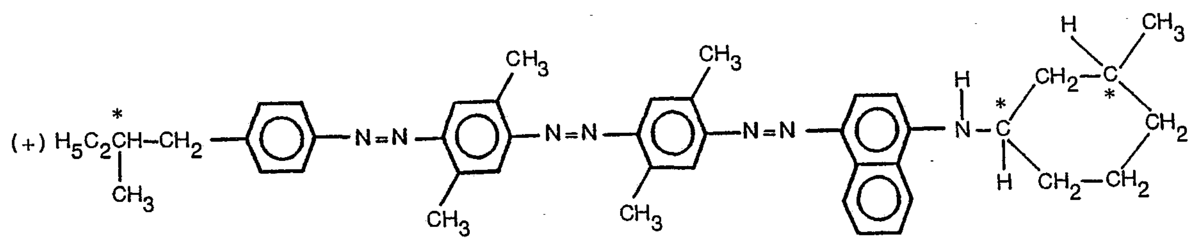

The helichromic dye intermediate (+)-p-2-methylbutyl)phenylazo-[2,5]-dimethylphenylazo-[2,5]-dimethylaniline (4.27 gm), prepared according to Example 11 was dissolved in 50 ml of a solution of 50% sulfuric acid in water and cooled to 0°C. Sodium nitrite (0.69 gm) as a 20% by weight solution in water was added dropwise and stirring was continued for 4 hours. Complete diazotization occurred and the clear diazonium was poured into a solution of 50 ml glacial acetic acid containing 2.23 gm (+)-N-(-3-methylcyclohexyl)-α-naphthylamine, prepared according to Example 9. Coupling was allowed to occur for 1 hour and the product was neutralized with a 20% sodium hydroxide in water solution and filtered. The dye product was purified by chromatography using silica gel and a 4:1 toluene/methanol solution as the eluent. The structure of the helichromic product was confirmed by NMR.

Example 27

Helichromic (+)-4-[4-(2-methylbutyl)phenylazo]-4′-[4-)camphanylamino)naphthylazo]-azobenzene

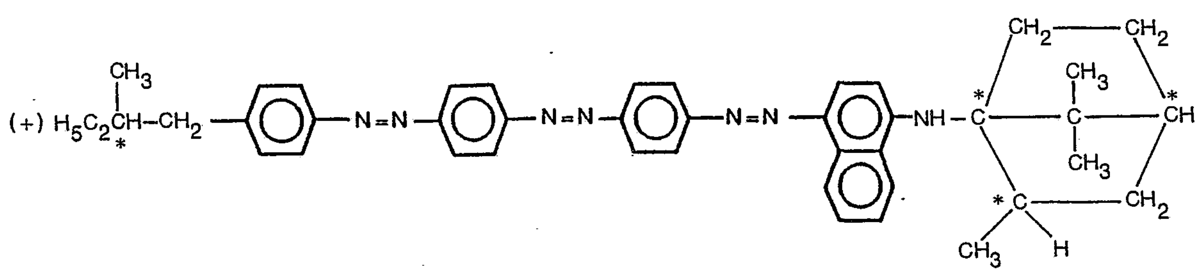

(+)-N-camphanyl-α-naphthylamine (2.26 gm), prepared according to Example 8, was dissolved in 25 ml glacial acetic acid. (+)-p-(2-methylbutyl)phenylazo(phenylazo)aniline (0.1 mole), prepared according to Example 12, was dissolved in 50 ml 87% sulfuric acid and diazotized using 40% nitrosylsulfuric acid in water (0.1 mol) added dropwise to the amine at 5 to 10°C. After the completion of diazotization the solution of chiral α-naphthylamine in acetic acid was added to the diazo solution along with 100 gm ice. After the coupling reaction occurred (1 hour) the mixture was diluted with 100 gm water and solid sodium acetate trihydrate was added until the pH was 5. The solution was then brought to pH 7 using a solution of 20% sodium hydroxide in water. The solid dye was collected by filtration, dried and recrystallized from toluene. Chromatography on silica using dichloromethane as eluent afforded the desired helichromic compound. The structure of the helichromic dye was confirmed by NMR.

Example 28

Helichromic (+)-1-[4-(4-methylhexyl)phenylazo]-4-[4-(2-methylbutyl)benzylidene]naphthalene

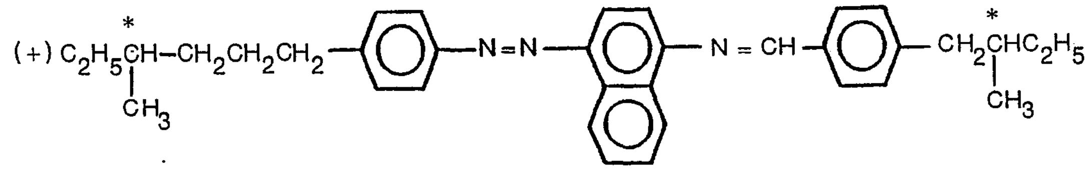

(+)4-(4-methylhexyl)aniline (18.1 gm), prepared according to Example 10, is added to a solution of 100 ml concentrated hydrochloric acid and 100 ml water. The slurry is stirred, cooled 0°C, and diazotized using 6.9 gm sodium nitrite. The clear diazonium solution is then added to a solution of 15.1 gm 4-aminonaphthylene in 50 ml glacial acetic acid. Coupling occurs and the pH is adjusted to 5 by addition of solid sodium acetate trihydrate. The coupled product is recovered by neutralizing the mixture with a solution of 25% sodium hydroxide in water, and collecting the product by filtration. The product (24.7 gm) is then dissolved in 100 ml hot ethanol and 17.6 gm (+)-4-(2-methylbutyl)benzaldehyde, prepared according to Example 5, is added. To this mixture is added 0.1 gm p-toluene sulfonic acid and the dye product forms almost immediately. Upon cooling the product is collected by filtration. Chromatography on silica using toluene as eluent affords the helichromic dye. The structure of the dye is confirmed by NMR.

Example 29

The reduction in "optical bounce" and in decay time for twist nematic liquid crystal displays utilizing a helichromic dye of the present invention were demonstrated in the following manner. Twist nematic display cells were assembled as described in U.S. 3,918,796.

Polaroid® "HN 45" polarizers were fitted to the front and rear surfaces of the cell and a metallic reflector was affixed to the rear surface of one of the polarizers to produce a reflective display. Three fill mixtures were prepared to demonstrate the effect of the helichromic compounds of the present invention. One fill mixture was pure "E-7", a positive nematic liquid crystal material, available from BDH Chemicals, Poole, England. Another fill mixture was "E-7" doped with 1% by weight cholesteryl nonanoate. The third mixture was "E-7" and 0.5% by weight helichromic (+)-1-[4-(2-methylbutyl)-anilino]-4-hydroxyanthraquinone.

An oscilloscope trace was used to observe the optical rise and decay pattern of cells filled with each of the above mixtures, as a function of time, when the cells were subjected to the following test procedure: The filled cell was mounted on an optical bench and a collimated tungsten light source located at an angle of 45° with respect to the cell surface, was focused on the display. An intermittent RMS voltage of 5 volts at 1 kHz was impressed across the electrode surfaces of the cell. The electro-optic modulation of each cell was observed via light reflected from the cell to a photometer, (Spectra Physics Co., Princeton, N.J.), fitted with a photopic filter and connected to a time base oscilloscope. In this way the optical contrast and the rise and decay characteristics of each display were determined.

The display cell filled with "E-7" containing no optically-active dopants exhibited a severe optical bounce which caused an extended decay time when the voltage applied across the cell was removed.

The display cell filled with 1% by weight cholesteryl nonanoate in "E-7" exhibited no detectable optical bounce and a radically reduced decay time, as compared to the cell containing only "E-7".

The display filled with 0.5% by weight helichromic (+)-1-[4(2-methylbutyl)anilino]-4-hydroxyanthraquinone in "E-7" exhibited no detectable optical bounce and a decay time comparable to the cell doped with 1% cholesteryl nonanoate.

Example 30

The reduction in decay time for guest-host type liquid crystal displays utilizing a helichromic dye of the present invention was illustrated in the following manner: Guest-host cells were assembled as in Example 29, however, since the cooperatively aligned helichromic compound absorbs one polarization of light, one polarizer was eliminated. Three "guest-host" mixtures were prepared. One mixture was "PCH 1132" positive nematic liquid crystal material available from the E. M. Merck Co., and 1% by weight of the pleochroic dye, 1,5-bis-(4-butyl anilino) anthraquinone. Another mixture was "PCH 1132" and 1% by weight of the above dye with 1% by weight of the optically-active additive agent "CB-15" available from BDH Chemicals, Inc. The third mixtures was "PCH 1132" containing 1% by weight of the helichromic dye (+)1,5-bis-[4-(2-methylbutyl) anilino] anthraquinone.

An oscilloscope trace was used to observe the optical rise and decay pattern as a function of time when each cell was illuminated and subjected to an intermittent electric field as in the procedure of Example 29.

The cell containing dye in "E-7" exhibited a severe optical bounce and a protracted decay time when the voltage applied across the cell was removed.

The cell containing 1% dichroic dye and 1% "CB-15" exhibited no detectable optical bounce and sharp decay characteristics.

The cell containing 1% helichromic dye exhibited no detectable optical bounce and sharp decay

characteristics, similar to the cell containing "CB-15". This example illustrates the effectiveness of the helichromic dyes of the present invention in reducing optical bounce. In addition, in helichromic displays only 1% by weight foreign additive (helichromic dye) is required to produce a display having the same optical characteristics as a conventional display containing 2% by weight foreign additives (dichroic dye plus optically-active additive).

**Claims**

1. A composition consisting essentially of a nematic liquid crystal material and, in admixture therewith, an organic, nonionic, nonliquid-crystalline helichromic compound, said helichromic compound being soluble in said nematic liquid crystal material, and said helichromic compound being a dichroic dye and having the general formula

$$Q(Z)_n$$

wherein:

Q is an azo, azo-stilbene, benzothiazolyl polyazo, methine, azo-methine, merocyanine, methine arylidene, anthraquinone or anthraquinone heterocyclic dicarboximide radical;

Z is an organic group capable of imparting helical ordering characteristics to said mixture of nematic liquid crystal and helichromic compound; and

n is an integer having a value of 1 or greater;

wherein when Q is an anthraquinone radical Z is substituted in the 2, 3, 4, 5, 6, 7 or 8 positions of Q or combinations thereof, provided that when Q is an anthraquinone radical and n is 2 or greater, Z may be substituted in the 1 and 2, 1 and 3, 1 and 4, 1 and 6, 1 and 7, or 1 and 8 positions of Q or combinations thereof, and further provided that when Q is an anthraquinone radical and Z includes a linking group linking it to said Q, wherein said linking group is

$$—CH{=}N—,\ —CH{=}CH—,\ —N{=}N—,\ —O—,\ —S—,\ (CH_2)_p,\ —O(CH_2)_p,\ —C(CH_3)_2—,\ —\overset{\overset{O}{\|}}{C}—,$$

$—C_6H_{10}—$, phenyl groups, naphthyl groups, cyclic carboximide groups or combinations thereof, wherein p is 1, 2, 3, 4 or 5, Z may be substituted in the 1, 4, 5 or 8 positions of Q or any combination thereof; and wherein when Q is an anthraquinone heterocyclic dicarboximide radical, n is 1 and Z is substituted on the nitrogen of said heterocyclic dicarboximide radical.

2. The composition of Claim 1, wherein Z contains an asymmetric carbon atom.

3. The composition of Claim 1, wherein Z is a (+)-2-methylalkyl group, a (+)-3-methylalkyl group, a (+)-citronellyl group, a (+)camphanyl group, a (+)-3-methylcyclohexyl group, or a (+)-α-methylbenzyl group.

4. A liquid crystal display device which is responsive to the absence or presence of an electric field, said device comprising one auxiliary polarizer, a layer of nematic liquid crystal composition, and two conductive electrodes positioned, respectively, adjacent opposing surfaces of said layer, said nematic liquid crystal composition being the composition of Claim 1, and said helichromic compound being present in an amount ineffective to allow said mixture to substantially absorb unpolarized light incident thereon in the absence of an electric field, but effective to provide said mixture with the ability to substantially absorb polarized light incident thereon in the absence of an electric field, and to substantially transmit said polarized light incident thereon in the presence of an electric field.

5. The liquid crystal display device of Claim 4 wherein said helichromic compound is present in a concentration of between about 0.5% and 2% by weight of said liquid crystal composition.

6. A liquid crystal display device which is responsive to the absence or presence of an electric field, said device comprising two auxiliary polarizers, a layer of nematic liquid crystal composition, and two conductive electrodes positioned, respectively, adjacent opposing surfaces of said layer, said nematic liquid crystal composition being the composition of Claim 1, and said helichromic compound being present in an amount ineffective to allow said mixture to substantially absorb unpolarized or polarized light incident thereon in the absence of an electric field, but effective to eliminate the hydrodynamic effect of optical bounce and reduce decay time.

7. The liquid crystal display device of Claim 6 wherein said helichromic compound is present in a concentration between about 0.1 and 1.0 percent by weight of said liquid crystal composition.

8. A liquid crystal display device which is responsive to the absence or presence of an electric field, said device having no auxiliary polarizers and comprising a layer of a nematic liquid crystal composition and two conductive electrodes positioned, respectively, adjacent opposing surfaces of said layer, said nematic liquid crystal composition consisting essentially of a nematic liquid crystal material and, in admixture therewith, an organic, nonionic, nonliquid-crystalline helichromic compound, said helichromic compound being soluble in said nematic liquid crystal material, said helichromic compound being a dichroic dye, said helichromic compound comprising at least one helical ordering moiety capable of imparting helical ordering characteristics to said mixture of nematic liquid crystal and helichromic compound, and said helichromic compound being present in said mixture in an amount effective to allow said mixture to substantially absorb unpolarized light incident thereon in the absence of an electric field and to substantially transmit unpolarized light incident thereon in the presence of an electric field.

9. The liquid crystal display device of Claim 8 wherein said helichromic compound is present in a concentration of between about 1 and 5 percent by weight of said liquid crystal composition.

10. The liquid crystal display device of claim 8 wherein said nematic liquid crystal composition is the composition of Claim 1.

**Revendications**

1. Une composition constituée essentiellement d'un cristal liquide nématique et, en mélange avec celui-ci, d'un composé hélichromique organique non ionique n'ayant pas un caractère de cristal liquide, ledit composé hélichromique étant soluble dans ledit cristal liquide nématique, et ledit composé hélichromique étant un colorant dichroïque et répondant à la formule générale

$$Q(Z)_n$$

dans laquelle:

Q est un radical azo, azo-stilbène, benzothiazolylpolyazo, méthine, azo-méthine, mérocyanine, méthine-arylidène anthraquinone ou anthraquinone-hétérocyclodicarboximide;

Z est un groupe organique capable de conférer un caractère d'arrangement en hélice audit mélange de cristal liquide nématique et de composé hélichromique; et

n est un entier ayant une valeur de 1 ou plus;

où, lorsque Q est un radical anthraquinone, Z substitue les positions 2, 3, 4, 5, 6, 7 ou 8 de Q ou leurs combinaisons, sous réserve que lorsque Q est un radical anthraquinone et n est 2 ou plus, Z puisse substituer les positions 1 et 2, 1 et 3, 1 et 4, 1 et 6, 1 et 7 ou 1 et 8 de Q ou leurs combinaisons, et sous réserve de plus que lorsque Q est un radical anthraquinone et Z comprend un groupe de liaison l'unissant audit Q, où ledit groupe de liaison est

$$-CH{=}N-,\ -CH{=}CH-,\ -N{=}N-,\ -O-,\ -S-,\ (CH_2)_p,\ -O(CH_2)_p,\ -C(CH_3)_2-,\ -\overset{O}{\overset{\|}{C}}-,$$

$-C_6H_{10}-$, des groupes phényles, des groupes naphtyles, des groupes carboximides cycliques ou leurs combinaisons, où p est 1, 2, 3, 4, ou 5, Z peut substituer les positions 1, 4, 5 ou 8 de Q ou l'une quelconque de leurs combinaisons;

et où, lorsque Q est un radical anthraquinone hétérocyclodicarboximide, n est 1 et Z substitue l'azote dudit radical hétérocyclodicarboximide.

2. La composition de la revendication 1, dans laquelle Z contient un atome de carbone asymétrique.

3. La composition de la revendication 1, dans laquelle Z est un groupe (+)-2-méthylalkyle, un groupe (+)-3-méthylalkyle, un groupe (+)-citronellyle, un groupe (+)-camphanyle, un groupe (+)-3-méthylcyclohexyle ou un groupe (+)-α-méthylbenzyle.

4. Un dispositif d'affichage à cristaux liquides qui réagit à l'absence ou à la présence d'un champ électrique, ledit dispositif comprenant un polariseur auxiliaire, une couche de composition à base de cristal liquide nématique et deux électrodes conductrices placées respectivement au voisinage des surfaces opposées de ladite couche, ladite composition à base de cristal liquide nématique étant la composition de la revendication 1, et ledit composé hélichromique étant présent en une quantité insuffisante pour que ledit mélange absorbe notablement la lumière non polarisée le frappant en l'absence d'un champ électrique mais efficace pour conférer audit mélange la capacité d'absorber notablement la lumière polarisée qui le frappe en l'absence d'un champ électrique, et de transmettre notablement ladite lumière incidente polarisée qui le frappe en présence d'un champ électrique.

5. Dispositif d'affichage à cristaux liquides de la revendication 4, dans lequel ledit composé hélichromique est présent en une concentration entre environ 0,5% et 2% du poids de ladite composition à base de cristal liquide.

6. Dispositif d'affichage à cristaux liquides sensible à l'absence ou à la présence d'un champ électrique, ledit dispositif comprenant deux polariseurs auxiliaires, une couche de composition à base de cristal liquide nématique et deux électrodes conductrices placées respectivement au voisinage des surfaces opposées de ladite couche, ladite composition à base de cristal liquide nématique étant la composition de la revendication 1, et ledit composé hélichromique étant présent en une quantité insuffisante pour que ledit mélange absorbe notablement la lumière non polarisée ou la lumière polarisée qui le frappe en l'absence d'un champ électrique mais efficace pour supprimer l'effet hydrodynamique de rebond optique et réduire le temps de déclin.

7. Le dispositif d'affichage à cristaux liquide de la revendication 6, dans lequel ledit composé hélichromique est présent en une concentration entre environ 0,1 et 1,0% en poids de ladite composition à base de cristal liquide.

8. Un dispositif d'affichage à cristaux liquides sensible à l'absence ou à la présente d'un champ électrique, ledit dispositif n'ayant pas de polariseurs auxiliaires et comprenent une couche d'une composition à base de cristal liquide nématique et deux électrodes conductrices placées respectivement au voisinage des surfaces opposées de ladite couche, ladite composition à base de cristal liquide nématique étant constituée essentiellement d'un cristal liquide nématique auquel est mélangé un composé

hélichromique organique non ionique n'ayant pas un caractère de cristal liquide, ledit composé hélichromique étant soluble dans ledit cristal liquide nématique, ledit composé hélichromique étant un colorant dichroïque, ledit composé hélichromique comprenant au moins un fragment d'arrangement en hélice capable de conférer un caractère d'arrangement en hélice audit mélange de cristal liquide en de composé hélichromique, et ledit composé hélichromique étant présent dans ledit mélange en une quantité efficace pour permettre audit mélange d'absorber notablement la lumière non polarisée qui le frappe en l'absence d'un champ électrique et de transmettre notablement la lumière non polarisée qui le frappe en présence d'un champ électrique.

9. Le dispositif d'affichage à cristaux liquides de la revendication 8, dans lequel ledit composé hélichromique est présent à une concentration entre environ 1 et 5% du poids de ladite composition à base de cristal liquide.

10. Le dispositif d'affichage à cristaux liquides de la revendication 8, dans lequel ladite composition à base de cristal liquide nématique est la composition de la revendication 1.

**Patentansprüche**

1. Zusammenzetzung, die im wesentlichen aus einem nematischen Flüssigkristallmaterial im Gemisch mit einer organischen nichtionogenen nichtflüssig-kristallinen helichromen Verbindung besteht, die in dem namatischen Flüssigkristallmaterial löslich und ein dichroitischer Farbstoff mit der allgemeinen Formel

$$Q(Z)_n$$

ist, in der

Q ein Azo-, Azo-Stilben-, Benzothiazolylpolyazo-, Methin-, Azo-Methin-, Merocyan-, Methinaryliden-, Anthrachinon- oder Anthrachinon-heterozkl. dicarboximid-Radikal ist;

Z eine organische Gruppe ist, die geeignet ist, dem Gemisch aus dem nematischen Flüssigkristall und der helichromen Verbindung wendelförmige Ordnungseigenschaften zu verleihen; und

n eine ganze Zahl mit einem Wert von mindestens 1 ist,

wobei wenn Q ein Antrachinonradikal ist, Z an mindestens einer der Positionen 2, 3, 4, 5, 6, 7 und 8 von Q als Substituent vorhanden ist, und wenn Q ein Anthrachinonradikal ist und n mindestens den Wert 2 hat, Z an den Positionen 1 und 2, 1 und 3, 1 und 4, 1 und 6, 1 und 7 oder 1 und 8 oder an Kombinationen dieser Positionen als Substituent vorhanden ist, und wenn Q ein Anthrachinonradikal ist und Z eine es mit Q verbinder Verbindungsgruppe enthält, die aus

$$-CH{=}N-,\ -CH{=}CH-,\ -N{=}N-,\ -O-,\ -S-,\ (CH_2)_p,\ -O(CH_2)_p,\ -C(CH_3)_2-,\ -\overset{O}{\overset{\|}{C}}-,$$

$-C_6H_{10}-$, einer Phenylgruppe, einer Napththylgruppe, einer zyklischen Carboximidgruppe oder einer Kombination dieser Gruppen besteht und p den Wert 1, 2, 3, 4, oder 5 hat, Z an der Position 1, 4, 5 oder 8 von Z oder einer Kombination dieser Positionen als Substituent vorhanden sein kann, und wenn Q ein Anthrachinon-heterzykl.dicarboximid-Radikal ist, n=1 ist und Z am Stickstoff des heretozyklischen Dicarboximidradikals als Substituent vorhanden ist.

2. Zusammensetzung nach Anspruch 1, dadurch gekennzeichnet, daß Z ein asymmetrisches Kohlenstoffatom enthält.

3. Zusammensetzung nach Anspruch 1, dadurch gekennzeichnet, daß Z eine (+)-2-Methylalkylgruppe, eine (+)-3-Methylalkylgruppe, eine (+)-Citronellylgruppe, eine (+)-Camphanylgruppe, eine (+)-3-Methylcyclohexylgruppe oder eine (+)-α-Methylbenzylgruppe ist.

4. Flüssigkristallanzeigevorrichtung, die auf das Nichtvorhandensein oder Vorhandensein eines elektrischen Feldes anspricht und einen Hilfspolarisator, eine Schicht aus einer nematischen Flüssigkristallzusammensetzung und zwei leitende Elektroden besitzt, die einander entgegengesetzten Flächen der genannten Schicht benachbart sind, wobei die nematische Flüssigkristallzusammensetzung die Zusammensetzung nach Anspruch 1 ist und die helichrome Verbindung in einer solchen Menge vorhanden ist, daß sie nicht geeignet ist, das Gemisch bei Nichtvorhandensein eines elektrischen Feldes zu einer beträchtlichen Absorption von darauffalendem, unpolarisiertem Licht zu befähigen, aber geeignet ist, das Gemisch bei Vorhandensein eines elektrischen Feldes zu einer beträchtlichen Absorption von darauffallendem polarisiertem Licht zu befähigen und zum beträchtlichen Übertragen von darauffallendem polarisiertem Licht zu befähigen.

5. Flüssigkristallanzeigevorrichtung nach Anspruch 4, dadurch gekennzeichnet, daß die helichrome Verbindung in einer Konzentration von etwa 0,5—2 Gew.% der Flüssigkristallzusammensetzung vorhanden ist.

6. Flüssigkristallanzeigevorrichtung, die auf das Nichtvorhandensein eines elektrischen Feldes anspricht und zwei Hilfspolarisatoren, eine Schicht aus einer nematischen Flüssigkristallzusammensetzung und zwei leitende Elektroden besitzt, die einander entgegengesetzten Flächen der genannten Schicht benachbart sind, wobei die nematische Flüssigkristallzusammensetzung die Zusammensetzung nach Anspruch 1 ist und die helichrome Verbindung in einer solchen Menge vorhanden ist, daß sie nicht geeignet ist, das Gemisch bei Nichtvorhandensein eines elektrischen Feldes zu einer beträchtlichen

Absorption von darauffallendem, unpolarisiertem Licht zu befähigen, aber bei Vorhandensein eines elektrischen Feldes geeignet ist, die hydrodynamische Wirkung einer optischen Reflexion zu beseitigen und die Abklingzeit zu verkürzen.

7. Flüssigkristallanzeigevorrichtung nach Anspruch 6, dadurch gekennzeichnet, daß die helichrome Verbindung in einer Konzentration von etwa 0,1 bis 1,0 Gew.% der Flüssigkristallzusammensetzung vorhanden ist.

8. Flüssigkristallanzeigevorrichtung, die auf das Nichtvorhandensein oder Vorhandensein eines elektrischen Feldes anspricht und keine Hilfspolarisatoren besitzt und die eine Schicht aus einer nematischen Flüssigkristallzusammensetzung und zwei leitende Elektroden besitzt, die einander entgegengesetzten Flächen der genannten Schicht benachbart sind, wobei die nematische Flüssigkristallzusammensetzung im wesentlichen aus einem nematischen Flüssigkristallmaterial im Gemisch mit einer organischen nichtionogenen nichtflüssigkristallinen helichromen Verbindung besteht, die in dem nematischen Flüssigkristallmaterial löslich und ein dichroitischer Farbstoff ist und mindestens eine wendelförmig ordnende Gruppierung besitzt, die geeignet ist, dem Gemisch aus dem nematischen Flüssigkristall und der helichromen Verbindung wendelförmige Ordnungseigenschaften zu verleihen, und die helichrome Verbindung in dem Gemisch in einer solchen Menge vorhanden ist, daß sie nicht geeignet ist, das Gemisch bei Nichtvorhandensein eines elektrischen Feldes zu einer beträchtlichen Absorption von darauffallendem unpolarisiertem Licht zu befähigen, aber geeignet ist, das Gemisch bei Vorhandensein eines elektrischen Feldes zu einer beträchtlichen Absorption von darauffallendem polarisiertem Licht zu befähigen und zum beträchtlichen Übertragen von darauffalendem polarisiertem Licht zu befähigen.

9. Flüssigkristallanzeigevorrichtung nach Anspruch 8, dadurch gekennzeichnet, daß die helichrome Verbindung in einer Menge von etwa 1 bis 5 Gew.% der Flüssigkristallzusammensetzung vorhanden ist.

10. Flüssigkristallanzeigevorrichtung nach Anspruch 8, dadurch gekennzeichnet, daß die nematische Flüssigkristallzusammensetzung die Zusammensetzung nach Anspruch 1 ist.

FIG. 1

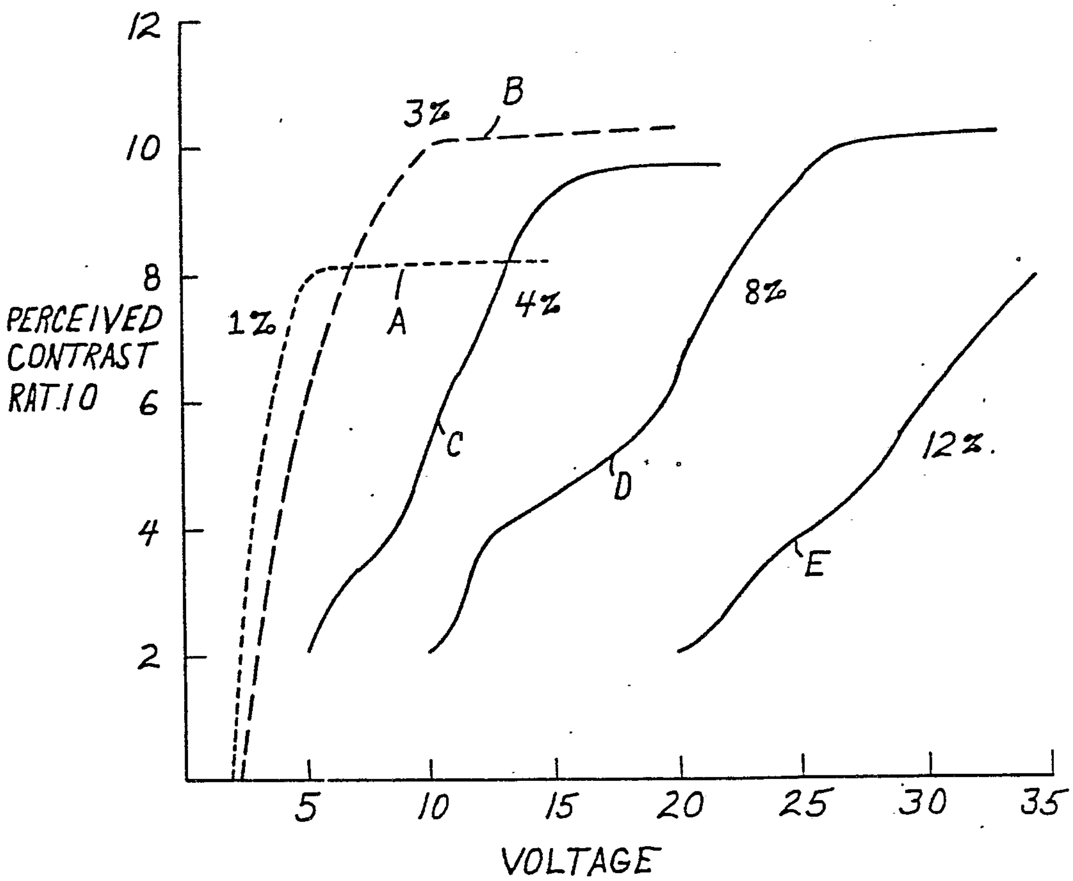
12
10
8
6
4
2
PERCEIVED CONTRAST RATIO
3%
B
1%
A
4%
C
8%
D
12%.
E
5
10
15
20
25
30
35
VOLTAGE

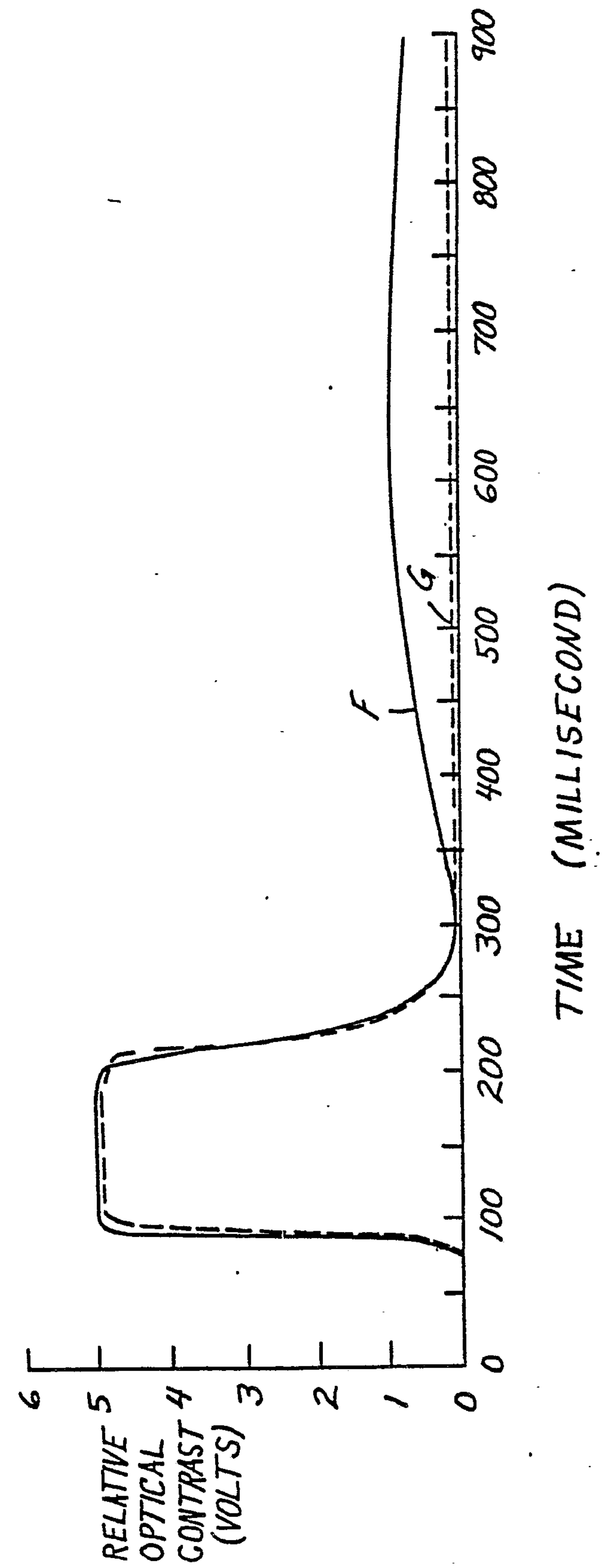
RELATIVE OPTICAL CONTRAST (VOLTS)
0
1
2
3
4
5
6
0
100
200
300
400
500
600
700
800
900
F
G
TIME (MILLISECOND)

FIG. 2